# EUROPÄISCHE PATENTSCHRIFT

(11) **EP 3 552 140 B1**
(45) Veröffentlichungstag und Bekanntmachung des Hinweises auf die Patenterteilung: **11.11.2020**
(21) Anmeldenummer: 17811537.4
(22) Anmeldetag: 05.12.2017
(51) Int. Cl.: G06F 21/62

(54) **DATENBANKINDEX AUS MEHREREN FELDERN**
DATABASE INDEX COMPRISING MULTIPLE FIELDS
INDEX DE BASES DE DONNÉES CONSTITUÉ DE PLUSIEURS CHAMPS

(30) Priorität: 08.12.2016 DE 102016224455
(43) Veröffentlichungstag der Anmeldung: 16.10.2019
(73) Patentinhaber: Bundesdruckerei GmbH, 10969 Berlin (DE)
(72) Erfinder: KOMAROV, Ilya, 13507 Berlin (DE); PAESCHKE, Manfred, 16348 Wandlitz (DE); DRESSEL, Olaf, 14641 Wustermark (DE); PALM, Peter, 30916 Isernhagen (DE); BACKHAUS, Michael, 30659 Hannover (DE)
(74) Vertreter: Richardt Patentanwälte PartG mbB
(86) Internationale Anmeldenummer: PCT/EP2017/081462
(87) Internationale Veröffentlichungsnummer: WO 2018/104274

(56) Entgegenhaltungen:
- DE-A1-102010 043 265
- DE-T5-112014 001 363
- US-B1- 9 258 122

## Beschreibung

### Technisches Gebiet

Die vorliegenden Darstellungen betreffen IT-Systeme und insbesondere die Erstellung von Indexstrukturen im Kontext von Datenbankmanagementsystemen.

### Stand der Technik

Aus dem Stand der Technik sind verschiedene Ansätze zur Erstellung und Nutzung von Indexstrukturen im Kontext von Datenbankmanagementsystemen (DBMSs) bekannt.

Beispielsweise verfügen fast alle klassischen, SQL basierten DBMSs über Kommandos, die es einem Nutzer ermöglichen, einen durchsuchbaren Index basierend auf den Daten einer bestimmten Spalte einer bestimmten Datenbanktabelle zu erstellen. Dieser Index kann dazu verwendet werden, die Durchführung von Datenbankabfragen die auf diese Spalte gerichtet sind zu beschleunigen, indem der Index nach einem bestimmten Suchdatenwert durchsucht wird anstatt die Werte der besagten Spalte alle sequenziell zu durchsuchen. Typischerweise wird hier eine Indexstruktur pro Tabellenspalte erstellt. Zu den DBMSs, die die Indexierung einzelner Spalten unterstützen gehören z.B. MySQL, PostgreSQL, Oracle, SAP Hana und viele mehr. Auch bei nicht-SQL basierten Datenbanksystemen werden Indexstrukturen zum schnellen Suchen und Finden bestimmter Datenwerte verwendet.

Klassischerweise wird der Datenwert eines Feldes in seiner Gesamtheit indiziert, also ohne diesen in Teilwerte ("Token") aufzuteilen. Viele DBMSs unterstützen aber mittlerweile auch die Volltextindexierung. Die Volltextindizierung beinhaltet eine Zerlegung von Texten in einzelne Wörter, wobei dann die einzelnen Wörter eines Textfeldes in einem diesem Feld zugeordneten Index gespeichert werden. Volltextindexierung wird nur unterstützt wenn das entsprechende Feld zur selektiven Speicherung eines bestimmten Datentyps, z.B. CHAR, VARCHAR oder TEXT, konfiguriert ist.

Datenbanken aller Art dienen oftmals auch zur geschützten Speicherung sensibler Daten, z.B. personenbezogener Daten, insbesondere medizinische oder biometrische Daten von Personen. Verschiedene Sicherheitsvorkehrungen zum Schutz der Daten sind dabei bekannt, z.B. die verschlüsselte Speicherung von Daten in einer Datenbank oder eine Anonymisierung oder Pseudonymisierung von Datensätzen. Problematisch ist, dass der Schutz der Rohdaten bzw. Datensätze alleine oftmals nicht ausreichend ist, da sich aus den Datenbankindizes sensible, personenbezogene Daten rekonstruieren lassen. Beispielsweise können gerade bei umfangreiverschiedene mustererkennende Algorithmen eingesetzt werden um aus den Indices pseudonymisierter Datensätze Rückschlüsse auf die Rohdaten zu ziehen. Die Indices bergen im Hinblick auf den Datenschutz oftmals besondere Risiken da bekannte Schutzmechanismen wie z.B. Verschlüsselung eine Nutzung des Index oftmals unmöglich machen. Der komplette Verzicht auf Indexstrukturen ist jedoch gerade bei großen Datensätzen aufgrund der erheblich verschlechterten Performance oftmals ebenfalls keine Option.

Die Patentanmeldung DE 102010043265 A1 beschreibt ein computerimplementiertes Verfahren zum Indizieren von Daten zur Verwendung durch mehrere Anwendungen. Das Verfahren umfasst das Empfangen eines Datenobjekts in einer ersten Anwendung von mehreren Anwendungen und das Tokenisieren eines Datenobjekts gemeinsamer Form, um Token aus dem Datenobjekt zu extrahieren und einen Index der aus dem Datenobjekt extrahierten Token zu erzeugen. Der Index wird formatiert, um durch jede der mehreren Anwendungen benutzt zu werden. Das Verfahren kann ferner das Speichern des Index in einer Datenbank umfassen, die den mehreren Anwendungen zugänglich ist.

### Technisches Problem und grundlegende Lösungen

Mit den bekannten DBMSs und diesbezüglich entwickelten Indexierungsverfahren ist es oftmals nicht möglich, hinreichenden Schutz der indizierten Daten sicherzustellen. Vor diesem Hintergrund besteht ein Bedarf an verbesserten Verfahren zur Erstellung von Indexstrukturen im Kontext von Datenbanken bereitzustellen und ein entsprechendes DBMS welche die vorangehend erwähnten Nachteile zumindest teilweise vermeiden.

Die der Erfindung zugrundeliegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein computerimplementiertes Verfahren zur Erstellung eines Index. Das Verfahren umfasst:
- Bereitstellen eines DBMS, das dazu konfiguriert ist, Datensätze jeweils als eine Menge aus mehreren Feldwerten strukturiert zu speichern, wobei die Feldwerte jeweils in einem Feld gespeichert werden, wobei die Felder jedes der Datensätze mindestens zwei unterschiedlichen Feldtypen angehören,
- Erzeugen von ersten Token aus ersten Feldwerten mehrerer Datensätze, wobei die ersten Feldwerte in ersten der Felder gespeichert sind, wobei die ersten Felder einem ersten Feldtyp angehören;

Die Erfindung ist in den unabhängigen Ansprüchen 1 und 15 definiert.
- Erzeugen von zweiten Token aus zweiten Feldwerten der mehreren Datensätze, wobei die zweiten Feldwerte in zweiten der Felder gespeichert sind, wobei die zweiten Felder einem zweiten Feldtyp angehören;
- Erzeugung eines durchsuchbaren Index aus zumindest den ersten und zweiten Token, wobei der Ort der Speicherung der ersten und zweiten Token in der Struktur des Index unabhängig davon erfolgt von welchem der Felder die Token stammen.

Dies kann vorteilhaft sein, da der auf diese Weise generierte Index, sollte er z.B. durch Datendiebstahl in die Hände unberechtigter Dritter gelangen, deutlich weniger an potentiell sensible Informationen preisgibt als dies bei herkömmlichen Datenbankindices der Fall ist.

Klassischerweise wird je ein Index für den Inhalt einer bestimmten Tabellenspalte generiert. Eine Tabellenspalte repräsentiert dabei oftmals ein bestimmtes Attribut von Datenobjekten, die in der jeweiligen Tabelle gespeichert sind. D.h., klassischerweise kann für eine Tabelle "Angestellte" beispielsweise ein Index für die Spalte "Vorname", ein weiterer Index für die Spalte "Nachname", ein weiterer Index für die Spalte "Position", ein weiterer Index für die Spalte "Geburtsjahr", ein weiterer Index für die Spalte "Personalausweis-ID" usw. erstellt werden. Sollten all diese Indexstrukturen für die Tabelle "Angestellte" in falsche Hände geraten, so ist es für unberechtigte Dritte ein leichtes, anhand der Indexstrukturen die vollständigen Datensätze, die in der Tabelle gespeichert sind, zu rekonstruieren. Da die Felder einzelnen indexiert sind, ist anhand des Indexnamens oder zumindest anhand des Inhalts in der Regel klar ersichtlich, für welche Art von Attributen ein in einem Index gespeicherter Datenwert steht. Sogar für den Fall dass die Tabelle "Angestellte" keine Klarnamen, sondern stattdessen numerische Pseudonyme enthält, wird anhand der Indexstruktur deutlich, dass ein numerischer Wert, der in der Spalte "Name" bzw. "Pseudonym" gespeichert ist, die Funktion eines Identifikators des entsprechenden Datensatzes und nicht einfach ein beliebiges Attribut des Objekts repräsentiert.

Demgegenüber beinhaltet der Index, der gemäß Ausführungsformen der Erfindung erstellt wurde, einen deutlich erhöhten Schutz der in ihm gespeicherten Daten. Dies liegt daran, dass die Feldwerte zumindest einiger der Felder der Datensätze tokenisiert werden. Der generierte Index, der auf diesem Token aufbaut, und der die Token unabhängig von dem Typ des Feldes, von welchen diese stammen, in der Indexstruktur speichert, lässt also keine Rückschlüsse darauf zu, ob ein bestimmtes Token den gesamten Feldwerte repräsentiert oder nur einen Teil davon, und lässt auch keinen Rückschluss darauf zu von welchem Feldtyp es abstammt. Ein bestimmter indizierter Zahlenwert in dem Index kann also gleichermaßen den Geburtstag des Angestellten, ein Erscheinungsdatum eines Artikels, in welchem über den Angestellten berichtet wird, eine ID des Angestellten, eine ID eines Presseartikels, in welchem über den Angestellten berichtet wird, eine Kennung eines Personalausweises, eines Kraftfahrzeugs, eines Geschenk-Gutscheins des Angestellten oder sonst eines beliebigen Attributes sein, welches mit einem bestimmten Objekt/Angestellten in mehr oder weniger enger semantische Beziehung steht.

Ausführungsformen der Erfindung stellen somit einen "chaotischen" bzw. "obfuszierten" Suchindex bereit, der sogar dann, falls er unbeabsichtigterweise an unberechtigte Dritte gelangt, oftmals keinen Rückschluss auf den Inhalt der in diesem indizierten Datensätze zulässt. Sensible Datensätze werden also erst dann semantisch transparent, wenn zusätzlich zu dem Index auch die eigentlichen Datensätze gestohlen werden. Vorzugsweise beinhaltet jeder Datensatz oder zumindest die Mehrzahl aller Datensätze eine Vielzahl von Feldern, von welchen wiederum viele Felder einen Datenwert beinhalten, der sich jeweils in eine Vielzahl unterschiedlicher Token zerlegen lässt. Dadurch kann sichergestellt werden, dass der Sinngehalt der einzelnen Datensätze rein anhand des Index nicht rekonstruiert werden kann, obwohl sämtliche Token, die aus den Feldwerten eines Datensatzes generiert und in dem Index gespeichert wurden, auf den Datensatz, von welchem sie stammen, referenzieren. Somit können Ausführungsformen der Erfindung einen Suchindex bereitstellen, welcher "security by obscurity" für die in ihm indizierten Daten bietet.

Nach Ausführungsformen handelt es sich bei den Datensätzen um pseudonyme Datensätze, die keine Klarnamen von Personen enthalten.

Nach manchen Ausführungsformen umfasst die Erzeugung der ersten Token eine Anwendung einer Tokenisierungslogik auf einen der ersten Feldwerte zur Erzeugung mehrerer der ersten Token aus diesem ersten Feldwert. Die Erzeugung der zweiten Token umfasst eine Anwendung dieser oder einer anderen Tokenisierungslogik auf einen der zweiten Feldwerte zur Erzeugung mehrerer der zweiten Token aus diesem zweiten Feldwert.

Dies kann vorteilhaft sein, da bereits zwei Feldtypen und entsprechende zwei Felder pro Datensatz ausreichen können, um einen hinreichend chaotischen Suchindex zu erzeugen. Beispielsweise kann in einem Feld eines ersten Feldtyps natürlichsprachlicher Text im Json Format gespeichert sein, der viele verschiedene Attribute eines Angestellten wie etwa dessen Alter, Eintrittsdatum in die Firma, Qualifikation, Zeugnisse, Lebenslauf-Daten und ähnliches gespeichert sein. In einem anderen Feld eines zweiten Feldtyp können ebenfalls eine Vielzahl von Daten im Json Format gespeichert sein, welche umfangreiche Angaben bezüglich der Rechte des Angestellten innerhalb des Unternehmens spezifizieren. Beispielsweise könnte das zweite Feld Angaben zu den Gebäuden, Computerprogrammen oder Maschinen beinhalten, für welche ein bestimmter Angestellter Zugriffsrechte oder Nutzungsrechte hat. Sowohl in den Feldwerten der Felder des ersten Feldtyps als auch in den Feldwerten der Felder des zweiten Feldtyps befinden sich numerische Zahlen. Im einen Fall können diese Zahlen Zeitpunkte von Geburtstagen, Zeugnissen und Abschlussprüfungen repräsentieren, im anderen Fall Zugangscodes, Gebäudenummern und Berechtigungsnachweise für sicherheitskritische Anwendungen innerhalb einer Firma, die den Angestellten beschäftigt. Der generierte Index wird also womöglich eine Vielzahl von Zahlen beinhalten, die alle auf einen bestimmten Angestellten/Datensatz referenzieren, ohne dass die Zahlen einem unberechtigten Dritten Informationen dazu liefern, was die Zahlen genau bedeuten.

Die Tokenisierung der Feldwerte sowohl des ersten als auch des zweiten Feldtyps kann dafür sorgen, dass anhand des Index auch nicht ersichtlich ist bzw. darauf geschlossen werden kann, wie groß ein bestimmter Datenwert im Regelfall ist. Auch dies ist ein-im Vergleich zu im Stand der Technik bekannten Indexierungsverfahrenvorteilhafter Aspekt: ist zum Beispiel bekannt, dass in einer indizierten Spalte einer klassischen Tabelle eine 9stellige alphanumerische Ausweis-ID gespeichert werden soll, so wird in der Regel die entsprechende Spalte bereits so angelegt, dass der in ihr zu speichernde Datenwert möglichst exakt passt um eine Verschwendung von Speicherplatz zu vermeiden, als im vorliegenden Beispiel als Varchar(9). Die in einem für diese Spalte generierten, "klassischen" Index gespeicherten Werte bestehen aus exakt 9 Symbolen, sodass umgekehrt anhand der Größe der in dem Index befindlichen Token Rückschlüsse auf die Art der indizierten Spalte bzw. des indizierten Attributs möglich sind. Da erfindungsgemäß ein oder mehrere der Felder Feldwerte beinhalten, die in Token (unterschiedlicher Größe) tokenisiert werden, enthält der generierte Index Token unterschiedlicher Länge und lässt auch deshalb keinen Rückschluss auf die semantische Bedeutung der in dem Index enthaltenen Token zu oder erschwert diesen zumindest.

Nach Ausführungsformen umfasst das Verfahren die Erzeugen von dritten Token aus dritten Feldwerten der mehreren Datensätze, wobei die dritten Feldwerte in dritten der Felder gespeichert sind. Die dritten Felder gehören einem dritten Feldtyp an. Die Erzeugung der dritten Token umfasst eine Verwendung eines der dritten Feldwerte in seiner Gesamtheit als eines der dritten Token.

Nach weiteren Ausführungsformen umfasst die Erzeugung der ersten Token eine Anwendung einer Tokenisierungslogik auf einen der ersten Feldwerte zur Erzeugung mehrerer der ersten Token aus diesem ersten Feldwert. Die Erzeugung der zweiten Token umfasst eine Verwendung eines der zweiten Feldwerte in seiner Gesamtheit als eines der zweiten Token.

Somit ist es durchaus möglich, dass der Index auch Token aus Feldern von Feldtypen beinhaltet, auf die keine Tokenisierung angewandt wird oder deren Inhalt sich schlichtweg nicht in einzelne Token aufteilen lässt. In Kombination mit ein oder mehreren Feldwerten, die jeweils in mehrere Token aufgeteilt werden, besteht aber dennoch auch für den Inhalt solcher nicht-tokenisierter Felder ein hinreichender Schutz vor der korrekten Interpretation der indizierten Daten rein anhand des Index durch unberechtigte Dritte.

Nach Ausführungsformen weist der Index die Struktur eines Baums, insbesondere eines B+ Baums, auf.

Dies kann vorteilhaft sein, da eine Baumstruktur insbesondere die Struktur eines B Plusbaums, eine besonders effiziente und schnelle Suche nach den in dem Index gespeicherten Token ermöglicht.

Nach Ausführungsformen speichert der Index sämtliche aus den Feldwerten der Datensätze einer Datenbank erzeugte Token so, dass der Index jedes Token nur einmal enthält. Jedes Token beinhaltet Zeiger auf ein oder mehrere der Datensätze, aus deren Feldwerten es erzeugt wurde.

Wenn ein erfindungsgemäß erzeugter Index also nach einem bestimmten Suchwert durchsucht wird und als Ergebnis der Suche ein in dem Index gespeichertes Token identifiziert wird, welches identisch ist mit dem Suchwert, so verweist dieses Token mittels Zeigern auf sämtliche Datensätze, die dieses Token zumindest einmal in zumindest einem ihrer Feldwerte enthalten und die bei der Erstellung des Index herangezogen wurden. Die Datensätze, die also einen "Treffer" im Hinblick auf den Suchwert darstellen, können anhand der Verweise sehr schnell identifiziert und zurückgegeben werden, ohne dass ein sequenzieller Suchlauf über sämtliche Datensätze notwendig wäre.

Nach Ausführungsformen sind die in dem Index gespeicherten Token frei von Referenzen auf Felder oder Feldtypen, die zur Speicherung von Feldwerten verwendet wurden, die zur Erzeugung der Token dienten.

Dies kann vorteilhaft sein, da hierdurch sichergestellt wird, dass die Verweise zwar eine Identifizierung der einzelnen Datensätze, die einen bestimmten Suchwert enthalten, ermöglicht, nicht jedoch eine Identifizierung einzelner Felder bzw. Feldtypen, da eine Identifizierung von Feldtypen Rückschlüsse auf die Bedeutung der in einem bestimmten Feld gespeicherten Feldwerte zulässt. Dadurch, dass die Indexstruktur frei ist von Referenzen auf einzelne Feldtypen bzw. Felder wird verhindert, dass der semantische Gehalt der indizierten Token aus der Indexstruktur abgeleitet werden kann.

Nach Ausführungsformen sind die Datensätze in einer Datenbank gespeichert, die von dem DBMS verwaltet wird, wobei die Datensätze unterschiedlich viele Felder umfassen.

Dies kann vorteilhaft sein, da ein sehr hoher Grad an Flexibilität bezüglich der Struktur und des Umfangs der Datensätze, die von dem erfindungsgemäßen DBMS verwaltet und gespeichert werden können, geboten wird. Zudem erhöht der Umstand, dass einzelne Datensätze eine unterschiedliche Anzahl und/oder eine unterschiedliche Zusammensetzung von Feldern unterschiedlicher Feldtypen haben können, zusätzlich die "chaotische" Natur des Index, da die Anzahl der Token, die pro Datensatz erzeugt und gespeichert wird, noch stärker schwankt, wenn unterschiedliche Datensätze unterschiedliche Felder (sowohl im Hinblick auf deren Zahl als auch deren Typ)haben.

Nach Ausführungsformen besitzen der erste Feldtyp und der zweite Feldtyp ein gemeinsames, generisches Datenformat. Dieses generische Datenformat erlaubt die Speicherung von Feldwerten, die sowohl Textdaten als auch zumindest Bilddaten, Audiodaten und/oder Videodaten beinhalten.

Dies kann vorteilhaft sein, da in einem bestimmten Feld eine große Anzahl an unterschiedlichen Datentypen gespeichert werden können. Ein Nutzer bzw. ein Applikationsprogramm, welches Datensätze in der Datenbank speichern will, muss sich also nicht um die Konsistenz und Passung von Datentypen kümmern. Außerdem verhindert die Verwendung von Feldtypen, die nicht auf einen bestimmten Datentyp (wie zum Beispiel Integer, Boolean, Varchar, etc.), beschränkt sind, bzw. denen ein sehr generischer Datentyp zugewiesen ist, dass ein unberechtigter Dritter, der sich Zugriff auf den Index verschafft hat, anhand der indizierten Datentypen Rückschlüsse auf den Inhalt der Attribute der ursprünglichen Datensätze ziehen kann.

Nach Ausführungsformen ist die Tokenisierungslogik ein Volltextindizierer der dazu konfiguriert ist, Texte in Wörter zu zerlegen und die Wörter als Token auszugeben.

Nach Ausführungsformen ist die Tokenisierungslogik ein generischer Tokenisierer. Die Anwendung des generischen Tokenisierers auf einen Feldwert umfasst das Erkennen von Daten unterschiedlichen Datentyps innerhalb des Feldwertes. Die Daten unterschiedlichen Datentyps umfassen Textdaten sowie Bilddaten und einen oder mehrere weitere Datentypen. Die ein oder mehreren weiteren Datentypen umfassen Audiodaten und/oder Videodaten. Daraufhin werden Tokenisierungsroutinen, die an den erkannten Datentyp angepasst sind, identifiziert und angewandt.

Die Verwendung von generischen Tokenisierern kann insbesondere in Kombination mit der Verwendung von generischen Datentypen für mehrere oder alle der Feldtypen einer Datenbank vorteilhaft sein: das DBMS bzw. Client-Applikationsprogramme des DBMS müssen also nicht verschiedene Tokenisierungslogik für verschiedene Datentypen vorhalten und müssen auch nicht Prüfroutinen vorsehen um sicherzustellen, dass der richtige Tokenisierer auf den richtigen Feldtyp bzw. Datentyp angewandt wird. Vielmehr kann der gleiche Tokenisierer auf die meisten oder alle Feldtypen angewandt werden, da die generische Tokenisierungslogik des Tokenisierers bereits selbsttätig dazu in der Lage und entsprechend konfiguriert ist, automatisch zu erkennen, ob ein Feldwert Zahlen, Wörter aus Buchstaben, Boolsche Werte, Audiodateien, Bilddateien, Videodateien oder sonstige Datenstrukturen eines bestimmten Typs beinhaltet und diese Elemente als einzelne Token zu extrahieren.

Beispielsweise kann ein generischer Tokenisierer neben einem Volltextindizierer, der auf Textdaten arbeitet, auch einen Segmentierungsalgorithmus beinhalten, der auf Bilddaten arbeitet. Der Segmentierungsalgorithmus kann bestimmte vordefinierte Grundformen, zum Beispiel Quadrate, Rechtecke Kreise und Ellipsen, erkennen, in einer bestimmten Weise kodieren, und die codierten Grundformen jeweils einzelnen als extrahierte Token im gleichen Index speichern, in dem auch die von dem Volltextindizierer extrahierten einzelnen Wörter gespeichert werden.

Nach Ausführungsformen beinhalten die ersten Feldwerte Volltexte. Als "erste Feldwerte" werden hier Feldwerte verstanden, die in dem ersten Feld gespeichert sind. Als "zweite Feldwerte" werden hier Feldwerte verstanden, die in dem zweite Feld gespeichert sind. Die Volltexte beinhalten aus Buchstaben des Alphabets gebildete Wörter. Außerdem beinhalten mehrere der ersten Feldwerte jeweils ein oder mehrere Zahlen. Die zweiten Feldwerte bestehen jeweils aus einer Zahl, wobei jede Zahl, die in einem der zweiten Felder gespeichert ist:
- einen Identifikator einer Person repräsentiert, welcher der Datensatz, der den Identifikator im zweiten Feld enthält, zugeordnet ist; oder
- einen Berechtigungsnachweis repräsentiert, welcher der Datensatz, der den Identifikator im zweiten Feld enthält, zugeordnet ist, wobei der Berechtigungsnachweis der Person Zugriffsrechte auf geschützte Daten oder geschützte Software- oder Hardwarefunktionalitäten einräumt; oder
- einen geheimen kryptographischen Schlüssel repräsentiert; oder
- ein in Form einer Zahl kodiertes biometrisches Merkmal einer Person repräsentiert.

Anhand dieser Beispiele ist ersichtlich, dass Zahlenwerte (aber auch Werte anderen Datentyps) sensible und gegebenenfalls personenbezogene Daten beinhalten können, die jedoch in einer Indexstruktur gemäß Ausführungsformen der Erfindung dennoch sicher und im Klartext und unverschlüsselt gespeichert werden können, da deren semantische Gehalt aus dem Index nicht erkennbar ist. Beispielsweise sind gerade sicherheitskritischen Systeme oftmals dadurch vor unberechtigten Zugriff geschützt, dass nach mehrfacher Eingabe eines falschen Berechtigungscodes (PIN) eine Authentifizierung über einen bestimmten Nutzernamen gar nicht mehr möglich ist (temporäre oder permanente Sperrung). Sogar falls ein unberechtigter Dritter also anhand eines Index sämtliche Datenwerte eines bestimmten Datensatzes herausfindet, und sogar wenn er die Person identifizieren kann, welcher dieser Datensatz zugeordnet ist, ist ab einer gewissen Anzahl an indizierten Zahlenwerten die Wahrscheinlichkeit sehr hoch, dass die zufällige Auswahl und Verwendung einiger dieser Zahlenwerte als Berechtigungscodes zur Authentifizierung gegenüber einem geschützten System zur Sperrung führt.

Nach Ausführungsformen umfasst das Verfahren ferner:
- Empfang einer Suchanfrage, wobei die Suchanfrage einen Suchwert beinhaltet;
- Durchsuchen des Index nach dem Suchwert;
- Identifizierung eines indizierten Tokens innerhalb des Index, welcher identisch ist zu dem Suchwert;
- Analyse von Datensatz-Zeigern, die in dem Index mit dem identifizierten Token verknüpft gespeichert sind, um ein oder mehrere der Datensätze zu identifizieren, welche ein oder mehrere Feldwerte beinhalten, aus welchen das indizierte Token erzeugt wurde,
- Zurückgabe der ein oder mehreren identifizierten Datensätze oder einer Referenz auf die ein oder mehreren identifizierten Datensätze in Antwort auf die Suchanfrage.

Die vorgenannten Schritte können z.B. durch das DBMS durchgeführt werden, das die Datensätze in einer Datenbank verwaltet. Alternativ dazu kann die Suche auch von anderen Programmen, die Zugriff auf den Index und die Datensätze haben, durchgeführt werden.

Nach Ausführungsformen handelt es sich bei dem DBMS um ein NoSQL-DBMS. Dies kann vorteilhaft sein, dass da sich herausgestellt hat, dass insbesondere NoSQL-DBMS, die oftmals eine flexiblere Struktur aufweisen als klassische SQLbasierte DBMSs. Aufgrund der Flexibilität ihrer Struktur eignen in sich NoSQL-DBMSs also ganz besonders für die Verwaltung und Speicherung von Datensätzen, aus welchen ein Index gemäß Ausführungsformen der Erfindung erstellt werden kann.

Nach Ausführungsformen umfassen die Datensätze ein Zufallswert-Feld, welches zur Speicherung eines Zufallswerts dient. Das Verfahren umfasst ferner:
- Speichern der Datensätze in der Datenbank, wobei die Feldwerte jedes Datensatzes in eines der Felder gespeichert wird, wobei im Zuge der Speicherung das DBMS für jeden der Datensätze ein Zufallswert generiert und als Feldwert in das Zufallswert-Feld gespeichert wird; und
- Verwenden der in den Zufallswert-Feldern gespeicherten Zufallswerte als weitere Token bei der Erzeugung des Index, sodass die Zufallswerte zu indexierten Token werden, wobei der Ort der Speicherung der ersten und zweiten Token und der Zufallswert-Token in der Struktur des Index unabhängig davon erfolgt von welchem der Felder die Token stammen.

Die Verwendung von zusätzlichen Feldern für die Speicherung von Zufallswerten und die automatische Generierung und Speicherung von Zufallswerten kann vorteilhaft sein, da sie eine Zuordnung von Token zu semantischen Konzepten rein anhand der Indexstruktur weiter erschwert bzw. unmöglich macht. Beispielsweise können die Zufallswerte als Zufallszahlen generiert werden. Insbesondere falls der Inhalt der meisten Felder textueller oder audiovisueller Natur ist und nur einige wenige Zahlenwerte enthält, und falls der Inhalt dieser Zahlenwerte aber besonders sensibel ist, kann es sinnvoll sein, mittels des Zufallszahlen-Generators die Datensätze zusätzlich mit Zahlen anzureichern, um dadurch eine Identifikation der Bedeutung der einzelnen Zahlen in dem Index zu verschleiern.

Nach Ausführungsformen umfasst das Verfahren ferner:
- Speicherung der Datensätze in verschlüsselter Form;
- Speicherung des Index in unverschlüsselter Form;
- Empfang einer Suchanfrage, wobei die Suchanfrage einen Suchwert beinhaltet,
- Als Antwort auf den Empfang, Durchsuchen des unverschlüsselten Index nach dem Suchwert; und
- Zurückgabe von ein oder mehreren anhand der Indexsuche identifizierten, verschlüsselten Datensätze oder einer Referenz auf die ein oder mehreren identifizierten Datensätze als Antwort auf die Suchanfrage.

Dies kann besonders vorteilhaft sein, da Ausführungsformen der Erfindung einen durchsuchbaren, unverschlüsselten Index in Kombination mit verschlüsselten Datensätzen bereitstellen. Diese Kombination aus Index und Datensätzen genügt sowohl hohen Ansprüchen an die Datensicherheit als auch an die Schnelligkeit des Auffindens bestimmter Datensätze. Von vielen Anwendungsszenarien ist das Problem bekannt, dass Daten in verschlüsselter Form gespeichert werden um zu verhindern, dass unberechtigte Dritte bei Verlust der Daten auf diese zugreifen können. Insbesondere im Kontext der Verwendung von Cloud Speicherdiensten ist die Angst vor Datenverlust allgegenwärtig und in hohem Maße begründet. Eine Verschlüsselung der Daten schützt diese wirksam vor unberechtigtem Zugriff, allerdings bewirkt die Verschlüsselung, das klassische Indizierungsverfahren nicht mehr angewendet werden können. Insbesondere bei sehr umfangreichen Datenbanken ist jedoch das Vorhandensein geeigneter Indexstrukturen eine unabdingbare Voraussetzung, um in angemessener Zeit bestimmte Daten identifizieren und gegebenenfalls modifizieren zu können.

Ausführungsformen der Erfindung stellen nun eine Lösung für dieses Dilemma bereit: da der Index auch in unverschlüsselter Form aufgrund seiner "inhärent chaotischen Struktur" sicher ist, muss er nicht verschlüsselt werden um die Vertraulichkeit der in ihm gespeicherten Informationen zu schützen. Denn der Index enthält zwar die aus den Datensätzen extrahierten Token, enthält aber keine Information darüber, von welchen Feldtypen diese Token stammen und welche Attribute diese repräsentieren. Es ist also möglich, den Index in unverschlüsselter Form bereitzustellen und für die schnelle Suche zu verwenden. Die Datensätze wiederum, die nach wie vor der Information beinhalten, was die einzelnen Token (Wörter/Zahlen/Bildsegmente) bedeuten und welche Attribute sie repräsentieren, werden in verschlüsselter Form bereitgestellt. Insbesondere wenn die Datensätze einzelnen verschlüsselt werden (also nicht die Datenbank als Ganze) kann der Index dazu verwendet werden, einzelne Datensätze zu identifizieren, die dann in verschlüsselter Form zurückgegeben werden. Wenn die zurückgegebenen, verschlüsselten Datensätze den richtigen (berechtigten) Empfänger erreichen, kann der Empfänger diese mit seinem Schlüssel entschlüsseln. Für den Fall dass die zurückgegebenen, verschlüsselten Datensätze einen falschen (unberechtigten) Empfänger erreichen, kann dieser mit den Datensätzen nichts anfangen, da diese verschlüsselt sind.

Nach Ausführungsformen verschlüsselt ein Client-Computersystem die Datensätze jeweils einzeln in einer Weise, dass das Client- Computersystem diese Datensätze wieder entschlüsselt kann, nicht jedoch ein Server- Computersystem, das zum Empfang der verschlüsselten Datensätze bestimmt ist. Das Verfahren beinhaltet ferner:
- vor der Verschlüsselung der Datensätze durch den Client-Computer, Generierung des Index durch das Client-Computersystem;
- Verschlüsselung des Index mit einem öffentlichen Schlüssel PubKS des Server-Computers durch das Client- Computersystem;
- Senden der verschlüsselten Datensätze und des verschlüsselten Index von dem Client- Computersystem an das Server- Computersystem über ein Netzwerk;
- Entschlüsselung des verschlüsselten Index durch das Server- Computersystem mittels eines privaten Schlüssels PrivKS des Server-Computers, wobei der private und der öffentliche Schlüssel des Server-Computers ein asymmetrisches kryptographisches Schlüsselpaar bilden;
- Speichern der verschlüsselten Datensätze durch das Server- Computersystem ohne diese entschlüsseln zu können;
- Speichern des entschlüsselten Indexes durch das Server- Computersystem;
- Bereitstellung einer Schnittstelle durch das Server- Computersystem um das Client- Computersystem oder anderen Computersystemen einen Zugriff auf den entschlüsselten Index zu ermöglichen;
- wobei der Empfang der Suchanfrage durch das Server-Computersystem über das Netzwerk erfolgt und das Durchsuchen des unverschlüsselten Index nach dem Suchwert durch das Server-Computersystem durchgeführt wird; und
- wobei die Zurückgabe der ein oder mehreren anhand der Indexsuche identifizierten, verschlüsselten Datensätze über das Netzwerk an das Computersystem, von welchem die Anfrage stammt, erfolgt;
- Empfang der ein oder mehreren identifizierten und verschlüsselten Datensätze durch das Client-Computersystem; und
- Entschlüsselung der empfangenen verschlüsselten Datensätze durch das Client-Computersystem.

Beispielsweise kann es sich bei dem Server Computersystem um ein verteiltes Computersystem eines Cloud Dienstes handeln, das aus einer Vielzahl von vernetzten Rechnern und Speichermodulen besteht. Ausführungsformen ermöglichen es dadurch, hochkritische, sensible Daten auf Cloud-Diensten zu speichern auch dann, wenn diese nicht vollständig vertraut wird oder werden kann. Denn der Cloud Dienstleister erhält die wertvollen Datensätze ja nur in verschlüsselter Form und kann diese auch nicht entschlüsseln. Lediglich den Index kann das Cloud-System entschlüsseln und muss dies auch tun um die Anfragen von ein oder mehreren Client-Computern bzw. Client-Applikationen bearbeiten zu können. Dadurch können Firmen nun Kosten für ihre eigene IT-Infrastruktur reduzieren, indem sie lediglich noch lokal den Index generieren und diesen mit dem öffentlichen Schlüssel des Cloud-Dienstes verschlüsseln. Außerdem verschlüsselt die Firma ihre Datensätze noch mit einem nur ihr bekannten privaten Schlüssel. Die Aufgabe, eine große Anzahl an verschlüsselten Datensätzen zu speichern und abrufbar vorzuhalten, gegebenenfalls einer großen Anzahl von (berechtigten) Client-Applikationen die Suche in dem Index zu ermöglichen und die gefundenen Datensätze (in verschlüsselter Form) zurückzugeben kann somit an einen Cloud-Dienst ausgelagert werden, ohne die Hoheit über die eigenen Daten zu verlieren.

In einem weiteren Aspekt betrifft die Erfindung ein Computersystem zur Erstellung eines Index. Das Computersystem umfasst:
- ein oder mehrere Prozessoren;
- ein oder mehrere Datenspeichermedien,
- ein DBMS, das dazu konfiguriert ist, die Datensätze jeweils als eine Menge aus mehreren Feldwerten strukturiert in den ein oder mehreren Datenspeichermedien zu speichern, wobei die Feldwerte jeweils in einem Feld gespeichert werden, wobei die Felder jedes der Datensätze mindestens zwei unterschiedlichen Feldtypen angehören,
- Programmlogik, die zur Erstellung des Index konfiguriert ist.

Die Erstellung des Index umfasst:
- Erzeugen von ersten Token aus ersten Feldwerten mehrerer Datensätze, wobei die ersten Feldwerte in ersten der Felder gespeichert sind, wobei die ersten Felder einem ersten Feldtyp angehören;
- Erzeugen von zweiten Token aus zweiten Feldwerten der mehreren Datensätze, wobei die zweiten Feldwerte in zweiten der Felder gespeichert sind, wobei die zweiten Felder einem zweiten Feldtyp angehören;
- Erzeugung eines durchsuchbaren Index aus zumindest den ersten und zweiten Token, wobei der Ort der Speicherung der ersten und zweiten Token in der Struktur des Index unabhängig davon erfolgt von welchem der Felder die Token stammen.

Nach Ausführungsformen ist das Client-Computersystem zur Durchführung des Verfahrens zur Erstellung eines Index gemäß den vorab beschriebenen Ausführungsformen ausgebildet.

Nach Ausführungsformen umfasst das Computersystem ferner ein Client-Computersystem und ein Server-Computersystem. Das DBMS und die Programmlogik zur Indexerzeugung sind in dem Client-Computersystem enthalten. Das Client-Computersystem und das Server-Computersystem sind über ein Netzwerk verbunden.

Das Client-Computersystem ist zur Durchführung folgender Operationen konfiguriert:
- Generierung des Index aus den unverschlüsselten Datensätzen;
- Verschlüsselung des Index mit einem öffentlichen Schlüssel des Server-Computers;
- Nach der Generierung des Index, Verschlüsselung der Datensätze jeweils einzeln so, dass das Client-Computersystem diese wieder entschlüsselt kann, nicht jedoch das Server-Computersystem;
- Senden der verschlüsselten Datensätze und des verschlüsselten Index von dem Client- Computersystem an das Server- Computersystem über das Netzwerk;

Das Server-Computersystem ist zur Durchführung folgender Operationen konfiguriert:
- Entschlüsselung des Index mittels eines privaten Schlüssels des Server- Computersystems, wobei der private und der öffentliche Schlüssel des Server- Computersystems ein asymmetrisches kryptographisches Schlüsselpaar bilden;
- Speichern der verschlüsselten Datensätze ohne diese entschlüsseln zu können;
- Speichern des entschlüsselten Index;
- Bereitstellung einer Schnittstelle die dem Client-Computersystem oder anderen Computersystemen einen Zugriff auf den entschlüsselten Index ermöglicht;
- Empfang einer Suchanfrage über das Netzwerk;
- Als Antwort auf den Empfang der Suchanfrage, Durchsuchen des unverschlüsselten Index nach dem Suchwert ;
- Zurückgabe von ein oder mehreren anhand der Indexsuche identifizierten, verschlüsselten Datensätze über das Netzwerk an das Computersystem, von welchem die Anfrage erhalten wurde;

Das Client-Computersystem ist ferner zur Durchführung folgender Operationen konfiguriert:
- Empfang der ein oder mehreren identifizierten und verschlüsselten Datensätze; und
- Entschlüsselung der empfangenen verschlüsselten Datensätze.

Unter einem **"Datenbankmanagementsystem"** oder **"DBMS"** wird im Folgenden ein elektronisches System zur Speicherung und Wiedergewinnung von Daten verstanden. Vorzugsweise werden die Daten in dem DBMS widerspruchsfrei und dauerhaft gespeichert und verschieden Anwendungsprogrammen und Nutzern in bedarfsgerechter Form effizient zur Verfügung gestellt. Ein DBMS kann typischerweise ein oder mehrere Datenbanken beinhalten und die darin enthaltenen Datensätze verwalten. Bei dem DBMS handelt es sich vorzugsweise um ein feldorientiertes DBMS, also um ein DBMS, das dazu konfiguriert ist, Teile einzelner Datensätze, sogenannte "Feldwerte", in mehrere unterschiedliche Felder zu speichern.

Unter einem **"Datensatz"** wird im Folgenden eine inhaltlich zusammenhängende und gemeinsam von einem Datenbankmanagementsystem verwaltete Menge an Daten verstanden. Ein Datensatz stellt typischerweise die kleinste strukturelle Einheit des Datenbestandes einer bestimmten Datenbank dar. Beispielsweise kann ein einzelner Datensatz eine bestimmtes physisches Objekt, z.B. eine natürliche Person, repräsentieren. Bei der Person kann es sich z.B. um einen Angestellten, einen Patienten, einen Kunden, etc. handeln. Der entsprechende Datensatz kann eine vordefinierte Menge von Attributwerten dieser Person beinhalten (z.B. Name oder Pseudonym, Alter, Größe, Gewicht, Geburtsdatum, Ausweisnummern, Sicherheitszertifikate, Authentifizierungscodes, biometrische Daten und andere).

Beispielsweise kann ein Datensatz eine Gruppe von inhaltlich zusammenhängenden (zu einem Objekt gehörenden) Datenfeldern repräsentieren, z. B. Artikelnummer, Artikelgröße, Artikelfarbe, Artikelname oder ähnliches. Die Feldtypen ,Name', ,Adresse' und 'Geburtsdatum' könnten z.B. die logische Struktur eines Datensatzes zum Objekttyp "Person" bilden. Datensätze entsprechen einer logischen Struktur, die bei der Entwicklung der Datenbank festgelegt wurde und in manchen Ausführungsformen auch noch zur Laufzeit der Datenbank verändert werden kann, z.B. durch Hinzufügen, Entfernen oder Umbenennen von Feldern. In der Datenverarbeitung werden Daten zu Datensätzen zusammengefasst und in Datenbanken gespeichert, sie sind Gegenstand der Verarbeitung von Computerprogrammen und werden von diesen erzeugt, gelesen, verändert und gelöscht.

Obwohl Daten eigentlich immer als Aneinanderreihung mehrerer Datenelemente auftreten, sollen hier nicht alle Erscheinungsformen von Daten einen 'Datensatz' darstellen, sondern nur Datengruppierungen, die zu einem bestimmten Objekt gehören und in Feldern organisiert sind, welche von einem DBMS gemeinsam verwaltet werden, wobei das DBMS dazu ausgebildet ist, die Datenfelder mittels vordefinierter Befehle anzulegen, zu löschen und/oder umzubenennen und ggf. auch in das Zugriffsrechtsmanagement des DBMS einzubinden. Nicht als Datensätze in diesem Sinn gelten demnach zum Beispiel: Fließtexte, Drucker- oder Video-Datenströme, Inhalte von ausführbaren Dateien, Fotodaten oder die Daten von Grafiksoftware u. a. Diese Daten können aber in einem Feld eines Datensatzes gespeichert sein.

Unter einem **"Feld"** wird im Folgenden ein Bereich auf einem logischen oder physikalischem Datenträger bezeichnet, der von einem DBMS verwaltet wird, der einem vordefinierten Feldtyp zugeordnet ist und der zur Speicherung eines Feldwertes eines Datensatzes angelegt und bestimmt ist. Eine "Feld" ist also ein Element zur Speicherung eines Feldwertes eines Datensatzes gemäß obiger Definition. Felder eines Datensatzes werden von einem DBMS gemeinsam verwaltet. Das Feld kann von dem DBMS mittels vordefinierter Befehle angelegt, gelöscht oder umbenannt und ggf. auch in das Zugriffsrechtsmanagement des DBMS einbezogen werden.

Ein **"Feldtyp"** ist eine Kategorie bzw. ein Typ, dem ein bestimmtes Feld angehört. Beispielsweise kann ein Feldtyp ein bestimmtes Attribut eines physischen Objektes repräsentieren. Beispielsweise kann ein DBMS zur Speicherung von Datensätzen, die Attribute von Angestellten enthalten, Feldtypen wie "Name", "Pseudonym", "Ausweisnummer"; "Zugriffszertifikat für Raum R", "Zugriffszertifikat für Gerät G", "Zugriffszertifikat für Gebäude GB", "Alter" verwenden. Jedes Feld ist dabei genau einem Feldtyp zugeordnet. Vorzugsweise darf jeder Datensatz maximal nur ein Feld für jeden im DBMS vordefinierten Feldtyp enthalten.

Ein **"Feldwert"** ist ein Datenwert, der Bestandteil eines Datensatzes ist und der zur Speicherung in einem Feld eines bestimmten Feldtyps bestimmt ist. Beispielsweise kann ein Feldwert des Datensatzes für einen bestimmten Angestellten "Max Mustermann" einen ersten Feldwert "Max Mustermann" für den Feldtyp "Name", einen weiteren Feldwert "13425298833" für den Feldtyp "Ausweisnummer", einen weiteren Feldwert "237971113" für den Feldtyp "Zugriffszertifikat für Raum R" beinhalten. Ein Feldwert kann aus einem einzigen Wort, einer einzigen Zahl, oder einer Kombination aus mehreren Wörtern und/oder Zahlen und/oder anderen Datenformaten bestehen, wobei verschiedene Ausführungsformen der Erfindung verschiedene Grade an Flexibilität im Hinblick auf die Art und Kombinierbarkeit von Datentypen innerhalb des gleichen Feldwertes umfassen.

Im Falle einer klassischen SQL-basierten Datenbank würde ein Feldtyp also einer Spalte einer Tabelle entsprechen, z.B. einer Spalte für "Alter" in einer "Angestelltentabelle". Jede Zeile in der Angestelltentabelle würde einem Datensatz entsprechen, welcher Attributwerte eines bestimmten Angestellten beinhaltet. Jede "Zelle" dieser Zeile entspricht einem Feld und dient der Speicherung eines Feldwertes (also eines einfachen oder zusammengesetzten Attributwerts des Angestellten). Ein Feld entspricht also dem Speicherbereich, in welchem ein bestimmter Datenwert/Feldwert eines Datensatzes gespeichert wird.

Unter einer **"Datenbank"** wird im Folgenden eine (typischerweise große) Menge von Daten verstanden, die in einem Computersystem von einem DBMS nach bestimmten Kriterien verwaltet wird. Die Daten sind dabei in einer Vielzahl von Datensätzen organisiert.

Ein **"NoSQL"** (englisch für Not only SQL) DBMS ist ein DBMS, das einem nichtrelationalen Ansatz der Datenspeicherung folgt und keine festgelegten Tabellenschemata benötigt. Zu den NoSQL DBMSs gehören insbesondere dokumentenorientierte DBMSs wie Apache Jackrabbit, BaseX, CouchDB, IBM Notes, MongoDB, Graphdatenbanken wie Neo4j, OrientDB, InfoGrid, HyperGraphDB, Core Data, DEX, AllegroGraph, und 4store, verteilte ACID- DBMSs wie MySQL Cluster, Key-Value-Datenbanken wie Chordless, Google BigTable, GT.M, InterSystems Cache, Membase, Redis, Sortierte Key-Value-Speicher, Multivalue-Datenbanken, Objektdatenbanken wie Db4o, ZODB, spaltenorientierte Datenbanken und temporale Datenbanken wie Cortex DB.

Unter einem **"Zertifikat"** wird hier im Folgenden ein digitales Zertifikat verstanden. Ein Zertifikat ist ein digitaler Datensatz, der bestimmte Eigenschaften von Nutzern oder anderen Objekten bestätigt und dessen Authentizität und Integrität durch kryptografische Verfahren geprüft werden kann. Das digitale Zertifikat enthält die zu seiner Prüfung erforderlichen Daten entweder selbst oder ist mit zertifikatsbezogenen Metadaten verknüpft gespeichert, sodass die zu seiner Prüfung erforderlichen Daten aus den Metadaten bezogen werden können. Die Ausstellung des Zertifikats erfolgt vorzugsweise durch eine offizielle Zertifizierungsstelle, die Certification Authority (CA). Beispielsweise kann das Zertifikat als Zahlenwert ausgebildet sein, welchem Metadaten zugeordnet sind. Die Verwendung von Zahlwerten kann vorteilhaft sein, da diese sich gut indexieren lassen sich und im Falle einer notwendigen Modifikation der Metadaten (z.B. Verlängerung der Validität) unverändert bleiben, also auch ihre Position innerhalb des Index beibehalten können. Vorzugsweise sind die Zertifikate also als Zahlwerte ausgebildet die keinen öffentlichen Schlüssel beinhalten, sondern mit Metadaten oder einem Public-Key-Zertifikat verknüpft gespeichert sind, wobei die Metadaten den Geltungsbereich bzw. Gültigkeitsdauer des Zertifikats näher festlegen. Alternativ dazu kann ein Zertifikat auch nach dem Standard X.509 ausgebildet sein, also einen öffentlichen Schlüssel beinhalten und die Identität des Inhabers und weitere Eigenschaften eines öffentlichen kryptographischen Schlüssels des Zertifikats bestätigen. Ein Zertifikat kann sich, muss sich aber nicht notwendigerweise auf einen kryptographischen Schlüssel beziehen, sondern allgemein Daten zur Prüfung einer elektronischen Signatur enthalten oder mit diesen verknüpft gespeichert sein.

Ein **"Tokenisierer"** ist eine Programlogik, die Daten, zum Beispiel einen Feldwert, als Input erhält, die Daten analysiert, z.B. um Delimiter oder andere Zerlegungskriterien und Muster zu erkennen und die Daten dann in ein oder mehrere Token als Ergebnis der Analyse zerlegt und die Token zurückgibt. Es ist auch möglich das nicht alle Token zurückgegeben werden konnte. Beispielsweise kann ein Volltextindizierer semantisch unbedeutende Stoppwörter erkennen und herausfiltern, sodass diese nicht indiziert werden. Einen Datenwert zu "tokenisieren" bedeutet also, den Datenwert nach einem bestimmten Schema in mehrere Bestandteile zu zerteilen. Die Bestandteile stellen die Token dar. So können z.B. natürlichsprachige Texte an vordefinierten Trennzeichen, z.B. Leerzeichen, Punkten oder Kommata, aufgeteilt werden, die so generierten Bestandteile (Wörter) werden als Token verwendet. Es ist möglich dass manche Token nicht für die Indizierung verwendet werden (z.B. Stopwörter) oder die Token vor der Indizierung zusätzlich verarbeitet werden (z.B. Reduzierung von Wörtern auf den Wortstamm). In diesem Fall erfolgt vorzugsweise eine gleichartige Verarbeitung des Suchwerts durch das Client-Computersystem oder das Server-Computersystem um sicherzustellen, dass die Suchwerte der Suchanfragen den in dem Index enthaltenen Token entsprechen.

Ein **"Index"** ist eine Datenstruktur, die die Suche nach bestimmten Datenwerten durch ein Datenbankmanagementsystem beschleunigt. Ein Index besteht aus einer Ansammlung von Zeigern (Verweisen), die eine Ordnungsrelation auf mehrere (in dem Index gespeicherte - "indizierte" - Datenwerte definieren. Beispielsweise werden hierfür B+-Bäume verwendet. Jeder indizierte Datenwert ist mit weiteren Zeigern verknüpft, die auf Datensätze verweisen, in welchen der gefundene indizierte Datenwert enthalten ist und die die Datenbasis für die Erstellung des Index darstellten. Datenbankmanagementsysteme verwenden Indices um als Antwort auf eine Suchanfrage die gewünschten Datensätze schnell zu identifizieren, indem zunächst der Index entlang der Zeiger nach einem Datenwert durchsucht wird welcher identisch zu einem in der Suchanfrage enthaltenen Referenzwert ist. Ohne Index müssten die von dem DBMS verwalteten Datenwerte eines Feldes sequenziell durchsucht werden, während eine Suche mit Hilfe des Index, z.B. eines B+ Baums, oft nur logarithmische Komplexität hat.

Die Verwendung von Ordinalzahlen wie erstes, zweites, drittes etc. dient hier allein der Unterscheidung von Elementen und/oder Personen mit ansonsten gleicher Bezeichnung und soll keine bestimmte Reihenfolge implizieren. Ferner kann es sich bei Elemente und/oder Personen, deren Bezeichnung sich allein durch eine Ordinalzahl unterscheidet, soweit sich aus dem konkreten Zusammenhang nicht eindeutig etwas anderes ergibt, um identische oder voneinander verschiedene Elemente bzw. Personen handeln.

### Kurzbeschreibung der Figuren

Ein exemplarisches Verfahren zur Erstellung eines Index sowie ein entsprechendes System sind in den anhängenden Zeichnungen 1 bis 5 veranschaulicht. Darin zeigen:
- Figur 1: ein Blockdiagramm einer Ausführungsform eines erfindungsgemäßen Computersystems.
- Figur 2: die in verschiedenen Feldern zweier Datensätze gespeicherten Feldwerte sowie die aus diesen erzeugten Tokenmengen.
- Figur 3: ein Flussdiagramm zur Erzeugung eines Index gemäß einer Ausführungsform.
- Figur 4: ein verteiltes Computersystem, das ein Server-Computersystem und mehrere Client-Computersysteme umfasst.
- Figur 5: weitere Details des Server-Computersystems und eines der Client-Computersysteme.

### Ausführliche Beschreibung

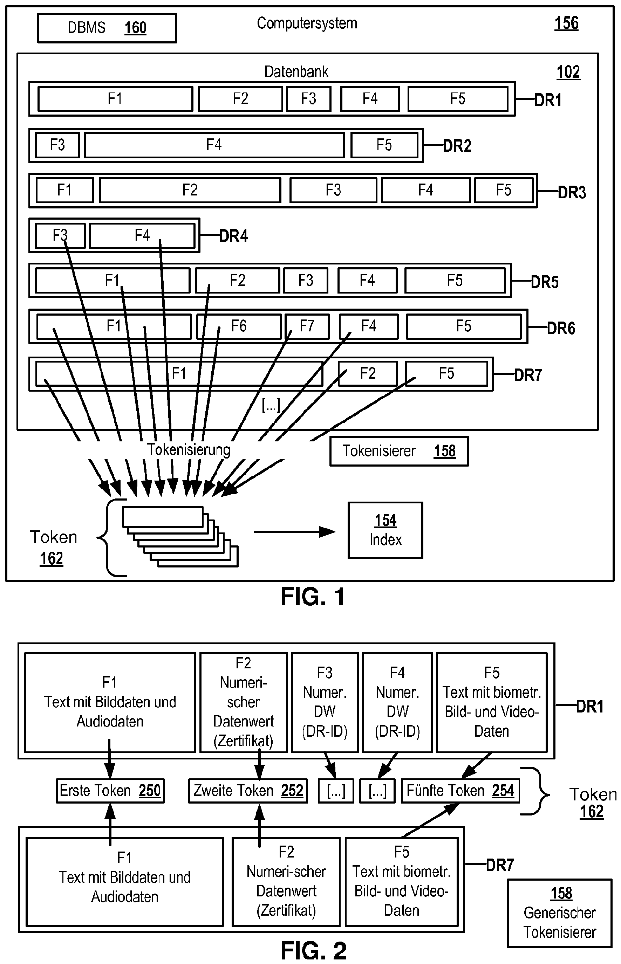

**Figur 1** zeigt ein Blockdiagramm einer Ausführungsform eines erfindungsgemäßen Systems zur Erzeugung eines "chaotischen" Index.

Ein Datenbankmanagementsystem, zum Beispiel ein non-SQL DBMS 160 wird auf einem Computersystem 156 instanziiert. Das DBMS 160 verwaltet eine oder mehrere Datenbanken. Die hier abgebildete Datenbank 102 umfasst eine Vielzahl von Datensätzen DR1, DR2, ..., DR7, ..., welche jeweils ein oder mehrere Feldwerte beinhalten. Jeder der Feldwerte eines Datensatzes ist in einem entsprechenden Feld, einer Art Datencontainer, gespeichert. Jedes Feld ist dabei einem bestimmten Feldtyp F1, F2, F3, F4, F5, F6, F7 zugewiesen. Beispielsweise ist das erste Feld von Datensatz DR1 dem Feldtyp F1 zugewiesen, das zweite Feld von Datensatz DR1 dem Feldtyp F2 usw. In analoger Weise ist das erste Feld von Datensatz DR6 dem Feldtyp F1 zugewiesen, das zweite Feld von Datensatz DR6 dem Feldtyp F6 usw. Die Zusammensetzung der Feldwerte der einzelnen Datensätze kann sich dabei im Hinblick auf deren Feldtypen unterscheiden, wie anhand der Datensätze in der Datenbank 102 ersichtlich ist. Es ist auch möglich das einzelne Datensätze gar keinen Feldwert eines bestimmten Feldtyps beinhalten. In anderen Ausführungsformen (hier nicht gezeigt) können auch mandatorische Feldtypen definiert sein, d.h., dass jeder Datensatz ein Feld für jeden mandatorischen Feldtyp beinhaltet und optional ein oder mehrere weitere Felder für optionale Feldtypen beinhaltet.

Das DBMS 160 verfügt über eine eingebaute Programlogik, die zur Generierung eines Index 154 ausgebildet ist, wobei der Index im Hinblick auf die Art und Weise, wie der Inhalt der Datensätze indiziert wird, besonders sicher ist. Der Index 154 lässt vorzugsweise auch dann keine Rekonstruktion der Datensätze bzw. des Bedeutungsgehalts der einzelnen Feldwerte zu, falls der Index in unverschlüsselter Form in die Hände unberechtigter Dritter gelangt. Die Programmlogik zur Generierung des Index umfasst einen oder mehrere Tokenisierer 158, die dazu ausgebildet sind, die Feldwerte von ein oder mehreren Feldern zu tokenisieren. Optional können auch Feldwerte ein oder mehrerer Felder zusätzlich als Ganzes ausgelesen und ohne eine Zerlegung als Token verwendet werden.

Nach alternativen Ausführungsformen wird die Programmlogik zur Generierung des Index 154 in Form eines Plug-ins oder Add-ons des DBMS bereitgestellt. Dies kann vorteilhaft sein, da mithilfe eines zusätzlichen Softwaremoduls zur Erstellung eines sicheren Index bestehende Typen von DBMSs funktional erweitert werden können, sodass eine Migration der Daten zu einem anderen DBMS um einen sicheren Index zu erstellen nicht notwendig ist. Nach einer weiteren, hier nicht dargestellten alternativen Ausführungsform kann der sichere Index 154 auch von einem eigenständigen Applikationsprogramm erstellt werden, welches in der Lage ist, die Datensätze von dem DBMS zu empfangen.

Vorzugsweise werden sämtliche oder zumindest die meisten Feldwerte sämtlicher Datensätze einer Datenbank 102 tokenisiert, sodass ein große Menge an Token 162 entsteht. In Abhängigkeit von der Art der Daten in den einzelnen Feldwerten können die Token 162 eine Mischung aus Zahlen, Buchstabenwörtern, Bildern oder Bildsegmenten, Audiodateien oder Audioelementen oder sonstigen Datenstrukturen beinhalten. Jedes der erzeugten Token ist mit einem Zeiger verknüpft gespeichert, wobei der Zeiger auf den Datensatz verweist, ihm das Token entstammt, nicht jedoch auf ein einzelnes Feld bzw. einen Feldtyp verweist, in welchem der Feldwert gespeichert wurde aus welchem der Token abgeleitet wurde.

In einem weiteren Schritt wird aus der Menge an Token 162 eine nicht-redundante, "unique" Token-Menge gebildet, in welcher jedes der Token nur ein einziges Mal vorkommt. D.h., auch wenn ein Token mit dem Wert "3467475675" mehrfach in der Datenbank 102 und damit auch in der zunächst gebildeten Tokenmenge 162 vorkommt, wird nur ein einziges Token mit dem Wert "3467475675" in der nicht-redundante Token-Menge und in dem Index 154 gespeichert. Allerdings erfolgt die Speicherung in dem Index 154 so, dass das Token auf sämtliche Datensätze DR1-DR7 verweist, in welchem es in zumindest einem Datenwert zumindest einmal enthalten ist. Vorzugsweise erfolgt die Speicherung aller Token der nicht-redundanten Tokenmenge in dem Index der Art, dass die Token nach einem Sortierkriterium sortiert werden und in sortierter Form in der Indexstruktur gespeichert werden. Die Sortierung kann beispielsweise anhand des Alphabets für alphanumerische Daten oder sonstiger, an die Daten angepasste Sortierkriterien erfolgen. Da die Token in dem Index vorzugsweise in sortierter Form gespeichert sind, und weiterhin vorzugsweise in einer Baumstruktur gespeichert sind, ist es sehr schnell möglich, ein bestimmtes Token innerhalb des Index zu identifizieren und dann die Verweise dieses identifizierten Tokens auf ein oder mehrere Datensätze zu verwenden, um sehr schnell diejenigen Datensätze zu identifizieren, die ein bestimmtes, gesuchtes Token enthalten. Es ist also nicht erforderlich, die Datensätze der Datenbank 102 sequenziell zu durchsuchen.

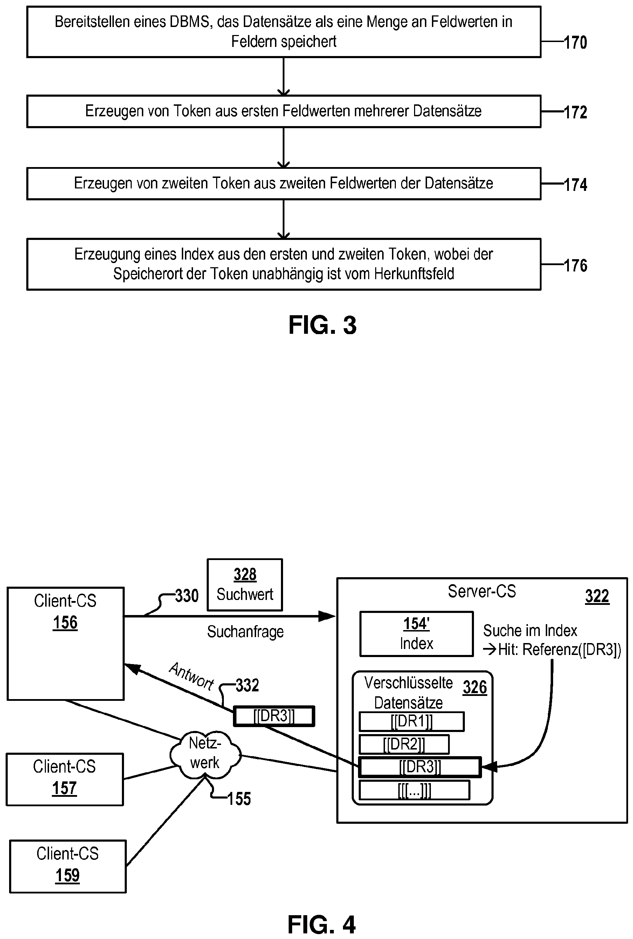

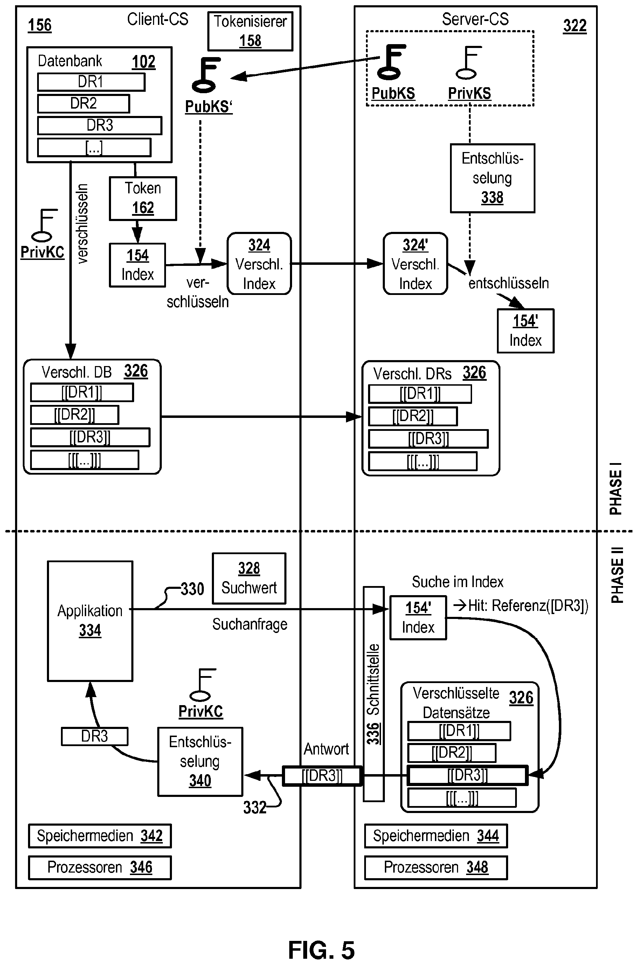

Da vorzugsweise für die Gesamtheit aller Feldwerte aller Datensätze ein einziger Index 154 gebildet wird, unter dieser Index frei ist von Informationen bezüglich der Felder und Feldtypen, denen die einzelnen Token entstammen, da vorzugsweise die Zahl und Zusammensetzung der Feldtypen einzelner Datensätze unterschiedlich ist und vorzugsweise ein oder mehrere Feldtypen Zufallswerte ohne funktionale oder semantische Bedeutung beinhalten, ist es nicht mehr möglich, anhand des Index 154 den Inhalt und die Bedeutung der ursprünglichen Feldwerte bzw. Datensätze ganz oder teilweise zu rekonstruieren. Somit wird ein Index geschaffen, der auch ohne Verschlüsselung gewährleistet, dass die in ihm enthaltenen Informationen von unberechtigten Dritten nicht missbraucht werden können. Dies kann insbesondere vorteilhaft sein beim Einsatz im Kontext von Cloud-Speicherdiensten wie dies zu Figuren 4 und 5 näher ausgeführt wird.

**Figur 2** zeigt beispielhaft die in verschiedenen Feldern zweier Datensätze gespeicherten Feldwerte sowie die aus diesen erzeugten Tokenmengen. So kann beispielsweise der Feldtyp F1 zur Speicherung von Lebensläufen dienen. In Feldern des Feldtyps F1 werden somit häufig natürlich sprachliche Texte mit Bilddaten und optional auch Audiodaten gespeichert. Feldtyp F2 kann zur Speicherung eines Berechtigungsnachweises für ein bestimmtes Gebäude, zum Beispiel in Form eines numerischen Datenwerts, der als Zertifikat dient, ausgebildet sein. Auch die Feldtypen F3 und F4 können zur Speicherung numerischer Datenwerte, die je als Berechtigungsausweise für ein weiteres Gebäude (F3) oder einen bestimmten Raum (F4) dienen, ausgebildet sein. Der Feldtyp F5 ganzer Speicherung biometrischer Daten dienen. Die biometrischen Daten können in Form von Texten, Bildern (zum Beispiel Fingerabdrücke, Irisbilder, etc.), und/oder Videodaten (Bewegungsmuster, etc.) in den Feldern des Feldtyps F5 gespeichert sein. Vorzugsweise haben die Felder der verschiedenen Feldtypen ein generisches Datenformat, das im Prinzip die Speicherung sämtlicher in der Datenbank vorkommender Datenformen (Text, Zahlen, Bilder, Video-, Audio und/oder sonstiger Dateien) zulassen. Dennoch ist es möglich, dass beispielsweise eine Applikationslogik, die die Daten erstellt, alle Daten eines bestimmten semantischen Konzepts (z.B. "Alter", "Geburtstag", "Zugangsberechtigung für Gebäude XY") ein einem speziell hierfür spezifizierten Feld gespeichert werden auch wenn das Feld auch die Speicherung anderer Datenformate unterstützen würde.

Vorzugsweise handelt es sich bei dem Tokenisierer um einen einzigen, generischen Tokenisierer, der auf sämtliche zu tokinisierenden Felder verschiedener Feldtypen angewandt wird. Der Tokenisierer 158 generiert aus dem im ersten Feld des Datensatzes DR1 gespeicherten Feldwert und aus dem im ersten Feld des Datensatzes DR7 gespeicherten Feldwert sowie aus den Feldwerten aller Feldern der anderen Datensätze, die dem Feldtyp F1 zugeordnet sind, eine Mengen an ersten Token 250. Der Tokenisierer 158 generiert zudem aus dem im zweiten Feld des Datensatzes DR1 gespeicherten Feldwert und aus dem im zweiten Feld des Datensatzes DR7 gespeicherten Feldwert sowie aus den Feldwerten aller Feldern der anderen Datensätze, die dem Feldtyp F2 zugeordnet sind, eine Mengen an zweiten Token 252. Dies wird für die Feldwerte sämtlicher Feldtypen F1-F7 durchgeführt, wobei vorzugsweise der gleiche generische Tokenisierer für alle Feldtypen verwendet wird. Die Gesamtheit der für alle Feldtypen generierten Token 250, 252, ..., 254 bildet die Tokenmenge 162.

**Figur 3** zeigt ein Flussdiagramm zur Erzeugung eines Index 154 gemäß einer Ausführungsform. In einem ersten Schritt 170 erfolgt die Bereitstellung eines DBMS 160, zum Beispiel die Instantiierung des DBMS auf einem Computersystem 156. Das DBMS 156 ist dazu konfiguriert, Datensätze DR1-DR7 jeweils als eine Menge aus mehreren Feldwerten strukturiert zu speichern. Dabei wird jeder der Feldwerte jeweils in einem eigenen Feld gespeichert. Die Felder jedes der Datensätze gehören mindestens zwei unterschi der edlichen Feldtypen F1-F7 an.

In Schritt 172 erfolgt die Erzeugung von ersten Token 250 aus ersten Feldwerten mehrerer Datensätze. Wie in Figur 2 beispielhaft gezeigt sind die ersten Feldwerte in ersten Feldern gespeichert. Die ersten Felder gehören einem ersten Feldtyp F1 an.

In Schritt 174 erfolgt die Erzeugung von zweiten Token 252 aus zweiten Feldwerten mehrerer Datensätze. Wie in Figur 2 beispielhaft gezeigt sind die zweiten Feldwerte in zweiten Feldern gespeichert. Die zweiten Felder gehören einem zweiten Feldtyp F2 an. In analoger Weise wird Schritt 172 bzw. 174 wiederholt für die Felder bzw. Feldwerte weiterer Feldtypen F3, ..., F7.

Schließlich erzeugt eine Tokenisierungslogik (zum Beispiel ein generische Tokenisierer 158) in Schritt 176 einen durchsuchbaren Index 154 aus zumindest den ersten Token 250 und den zweiten Token 252 und gegebenenfalls den weiteren für andere Datentypen erzeugten Token 254. Der Ort der Speicherung der ersten und zweiten und der gegebenenfalls weiteren Token 254 in der Struktur des Index erfolgt unabhängig davon, von welchem der Felder die Token stammen.

**Figur 4** zeigt übersichtsartig ein verteiltes System, das ein Server-Computersystem 322 und mehrere Client-Computersysteme 156, 157, 159 umfasst. Die Computersysteme 322, 156, 157, 159 sind über ein Netzwerk 155, z.B. das Internet, miteinander verbunden.

Das Client-Computersystem 156 kann beispielsweise ein Client-Applikationsprogramm beinhalten, welches eine Suchanfrage 330 über das Netzwerk an das Server-Computersystem 322 sendet. Die Suchanfrage beinhaltet einen Suchwert 328, zum Beispiel ein Nutzer-Pseudonym in Form eines Zahlenwertes "3463744".

Das Server-Computersystem 322 kann als ein Cloud-Computersystem ausgebildet sein, welches selbst aus einer Vielzahl miteinander vernetzten und operativ aneinander gekoppelten Ressourcen, insbesondere mehreren Datenspeichergeräten und Prozessoren, besteht. Das Server-Computersystem stellt Datensätze einer Datenbank für eine Vielzahl von berechtigten Client-Computersystemen 156, 157, 159 über das Netzwerk bereit. Die Bereitstellung umfasst das Verfügbarmachen eines Index 154'. Der Index ermöglicht es den Client-Computersystemen, den Inhalt der Datenbank 326 zu durchsuchen sowie Treffer [[DR3]] zu identifizieren und zurückzugeben, obwohl die Datenbank 326 verschlüsselt ist.

Die Speicherung von großen Datenbanken und die Bereitstellung eines entsprechenden Suchindex für eine Vielzahl von Client-Computersystemen stellen oftmals eine erhebliche Anforderung im Hinblick auf die Systemsicherheit, Ausfallsicherheit und Leistungsfähigkeit der Prozessoren und Speicherkomponenten dar. Eine Auslagerung dieser Dienste auf spezialisierte Cloud-Computersysteme ist daher gerade für viele mittelständische Unternehmen von hohem ökonomischen Interesse. Allerdings befinden sich die Daten, die auf Cloud-Rechnern gespeichert sind, oftmals im Ausland und/oder unter der Kontrolle eines Cloud-Dienstanbieters, dem nicht vollständig vertraut wird. Ausführungsformen der Erfindung ermöglichen also die Auslagerung und Speicherung von sensiblen Daten auf Cloud-Dienste in einer Weise, dass diese dennoch über einen Index durchsuchbar sind und an mehrere berechtigte Client-Computersysteme zur Verfügung gestellt werden können, ohne dass die Vertraulichkeit der in dem Cloud-Speicherdienst gespeicherten Daten (Datensätze und Index) gefährdet ist.

**Figur 5** zeigt weitere Details des Server-Computersystems 322 und eines 156 der Client-Computersysteme, gemäß einer weiteren Ausführungsform der Erfindung.

Dem Server-Computersystem ist ein asymmetrisches kryptographisches Schlüsselpaar zugeordnet, welches einen öffentlichen kryptographischen Schlüssel PubKS und einen privaten kryptographischen Schlüssel privKS beinhaltet. Der öffentliche Schlüssel wird in Kopie PubKS' dem Client-Computersystem zur Verfügung gestellt. Dies kann beispielsweise direkt erfolgen, also in dem das Client-Computersystem den Schlüssel direkt von dem Server-Computersystem empfängt. Die Schlüsselübertragung kann aber auch indirekt erfolgen, indem beispielsweise das Server-Computersystem seinen öffentlichen Schlüssel in einer öffentlich einsehbaren Datenbank hinterlegt und das Client-Computersystem den öffentlichen Schlüssel PubKS' von dieser Datenbank herunterlädt. Der private Schlüssel PrivKS dient der Entschlüsselung von Daten, die mit dem öffentlichen Schlüssel PubKS verschlüsselt wurden. Der private Schlüssel PrivKS ist vorzugsweise geschützt gespeichert und nur dem Server-Computersystem, nicht aber einem der Client-Computersysteme zugänglich.

Auch das Client-Computersystem verfügt über einen privaten Schlüssel privKC, der geschützt gespeichert ist, sodass der private Schlüssel PrivKC nur von dem Client-Computersystem 156 (und optional von weiteren, berechtigten Client-Computersystemen 157, 159) gelesen und verwendet werden kann, nicht jedoch vom Server-Computersystem.

Das Client Computersystem beinhaltet eine Tokenisierungslogik 158 und ein DBMS mit einer Datenbank 102 gemäß einer der hier bereits beschriebenen Ausführungsformen.

### Phase I

In einer ersten Phase wird von dem Client-Computersystem ein Index der Datenbank 102 erstellt und der generierte Index 154 sowie die Datensätze der Datenbank 102 verschlüsselt. Bei der Verschlüsselung der Datensätze und des Index werden unterschiedliche kryptografische Schlüssel verwendet.

Vorzugsweise werden die Datensätze einzelnen verschlüsselt, was den Vorteil hat, dass diese auch einzeln in verschlüsselter Form zurückgegeben werden können. Die einzelnen Datensätze werden so verschlüsselt, dass das Client- Computersystem diese wieder entschlüsselt kann, nicht jedoch das Server- Computersystem 322, das die verschlüsselten Datensätze speichern und für ggf. eine Vielzahl an Clients vorhalten soll. Beispielsweise kann der Schlüssel PrivKV ein privater, symmetrischer kryptographische Schlüssel sein, der sowohl zur Verschlüsselung als auch zur Entschlüsselung von Daten verwendet werden kann. Alternativ dazu kann das Client-Computersystem über ein weiteres asymmetrisches kryptographisches Schlüsselpaar verfügen, wobei beide Schlüssel dieses Paares nur dem Client-Computersystem 156 (und gegebenenfalls noch weiteren berechtigten Client-Computersystemen), nicht jedoch dem Server-Computersystem bekannt sind. Ein Schlüssel dieses Paares dient zur Verschlüsselung der Datensätze, der andere Schlüssel des Paares zur Entschlüsselung der verschlüsselten Datensätze 326. Aus dem Datensatz DR1 etwa wird also der verschlüsselte Datensatz [[DR1]]. Aus dem Datensatz DR3 wird also der verschlüsselte Datensatz [[DR3]].

Den Index 154 verschlüsselt das Client-Computersystem 156 dagegen mit dem öffentlichen Schlüssel PubKS des Server-Computers.

Die verschlüsselten Datensätze 326 und der verschlüsselte Index 324 werden von dem Client- Computersystem an das Server- Computersystem übertragen. Dies kann beispielsweise direkt über das Netzwerk 1 von 5, zum Beispiel das Internet, erfolgen. Nach Ausführungsformen erfolgt die Verschlüsselung und Übertragung der Datensätze in regelmäßigen zeitlichen Abständen komplett oder inkrementell, wobei jeweils der Index neu gebildet, neu verschlüsselt und neu übertragen wird.

Der übertragene verschlüsselte Index 324' wird vom Server-Computersystem mittels des privaten Schlüssels PrivKS des Server-Computers entschlüsselt und als eine unverschlüsselte Kopie 154' des Index 154 auf ein oder mehreren Speichermedien 344, die von dem Server-Computersystem verwaltet werden, gespeichert.

Auch die empfangenen und verschlüsselten Datensätze 326 werden auf den Speichermedien 344 gespeichert, ohne diese jedoch zu entschlüsseln, da das Server-Computersystem nicht über die Schlüssel verfügt, die notwendig sind, um die Datensätze zu entschlüsseln.

Das Server-Computersystem stellt eine Schnittstelle 336 bereit, welche es dem Client-Computersystem 156, das den Index und die Datensätze bereitgestellt hat, ermöglicht, auf den Index 154'zuzugreifen. Vorzugsweise ermöglicht die Schnittstelle auch weiteren Client-Computersystemen einen entsprechenden Zugriff auf den Index 154', wobei die weiteren Client-Computersysteme die gegebenenfalls vom Server-Computersystem bereitgestellten verschlüsselten Datensätze nur dann auswerten können, wenn sie ebenfalls über einen geeigneten Entschlüsselungsschlüssel PrivKC verfügen.

Während in der ersten Phase die Generierung Verschlüsselung und Verteilung von Index und Datensätzen beschrieben ist, wird in der zweiten Phase der Ablauf einer beispielhaften Suchanfrage anhand eines Beispiels beschrieben.

### Phase II

Im abgebildeten Beispiel sendet eine Client-Applikation 334, auf dem Client-Computersystem 156 instanziiert ist, eine Suchanfrage 330 über die Schnittstelle 336 an das Server-Computersystem. Die Suchanfrage beinhaltet einen Suchwert 328, zum Beispiel "2654645".

Als Antwort auf den Empfang der Suchanfrage durchsucht das Server-Computersystem den unverschlüsselten Index 154' nach einem Token, das exakt dem Suchwert "2654645" entspricht. Beispielsweise kann der Suchlauf nach diesem Suchwert ein bestimmtes Token innerhalb des Index 154' identifizieren, welches den Datensatz DR3 referenziert. Der Datensatz DR3 liegt auf dem Server-Computersystem nur in verschlüsselter Form [[DR3]] vor. Als Antwort auf die Suchanfrage 330 gibt das Server-Computersystem also den identifizierten, verschlüsselten Datensatz [[DR3]] in einer Antwort-Nachricht 332 an das Client-Computersystem zurück. Eine Entschlüsselungslogik 340 des Client-Computersystems, die Zugriff auf den Entschlüsselung-Schlüssel PrivKC besitzt, entschlüsselt den Datensatz und liefert den entschlüsselten Datensatz DR3 an die Client-Applikationslogik 334 als das Ergebnis der Suchanfrage 330.

Anhand der Abbildung ist ersichtlich, dass für die Phase zwei ein Vorhandensein der Original-Datenbank 102 bzw. ein Vorhandensein der unverschlüsselten Datensätze DR1-DR7 auf dem Client-Computersystem nicht erforderlich ist. Es ist also möglich, dass nur ein bestimmtes Client-Computersystem 156 der Generierung und Verschlüsselung des Index bzw. der Verschlüsselung der Datensätze dient, während eine Vielzahl weiterer Client-Computersysteme 157, 159 ausschließlich Programlogik implementieren, die zur Durchführung der hier in Phase zwei aufgeführten Schritte erforderlich ist. Diese weiteren Client-Computersysteme benötigen also keinen öffentlichen Schlüssel des Servers PubKS und keine Tokenisierungslogik zur Erstellung des Index, benötigen aber eine Client-Applikation 334, eine Entschlüsselungslogik 340 und den entsprechenden Entschlüsselungsschlüssel PrivKC zur Entschlüsselung der Datensätze.

### Bezugszeichenliste

- DR1-DR7: Datensätze
- F1-F7: Typen von Datenfeldern
- 102: Datenbank
- 154: Index
- 154': Kopie von Index 154
- 155: Netzwerk
- 156: (Client-) Computersystem
- 157: Client-Computersystem
- 158: Tokenisierungslogik
- 159: Client-Computersystem
- 160: DBMS
- 162: Token
- 170-176: Schritte
- 250: Menge an ersten Token
- 252: Menge an zweiten Token
- 254: Menge an fünften Token
- 322: Server-Computersystem
- 324: verschlüsselter Index
- 324': Kopie des verschlüsselten Index
- 326: verschlüsselte Datenbank
- 328: Suchwert
- 330: Suchanfrage
- 332: Antwort auf Suchanfrage
- 334: Client-Applikation
- 336: Schnittstelle
- 338: Entschlüsselungslogik des Server-Computersystems
- 340: Entschlüsselungslogik des Client-Computersystems
- 342: Speichermedien
- 344: Speichermedien
- 346: Prozessor(en)
- 348: Prozessor(en)
- PubKS: öffentlicher Schlüssel des Server-Computersystems
- PrivKS: privater Schlüssel des Server-Computersystems
- PrivCS: privater Schlüssel des Client-Systems

## Patentansprüche

1. Computerimplementiertes Verfahren zur Erstellung eines Index (154), umfassend:
- Bereitstellen (170) eines DBMS (160), das dazu konfiguriert ist, Datensätze (DR1-DR7) jeweils als eine Menge aus mehreren Feldwerten strukturiert zu speichern, wobei die Feldwerte jeweils in einem Feld gespeichert werden, wobei die Felder jedes der Datensätze mindestens zwei unterschiedlichen Feldtypen (F1-F7) angehören,
- Erzeugen (172) von ersten Token (250) aus ersten Feldwerten mehrerer Datensätze, wobei die ersten Feldwerte in ersten der Felder gespeichert sind, wobei die ersten Felder einem ersten Feldtyp (F1) angehören;
- Erzeugen(174) von zweiten Token (252, 254) aus zweiten Feldwerten der mehreren Datensätze, wobei die zweiten Feldwerte in zweiten der Felder gespeichert sind, wobei die zweiten Felder einem zweiten Feldtyp (F2, F5) angehören;
- Erzeugung (176) eines durchsuchbaren Index (154) aus zumindest den ersten und zweiten Token, wobei der Ort der Speicherung der ersten und zweiten Token in der Struktur des Index unabhängig davon erfolgt von welchem der Felder die Token stammen.

2. Das computerimplementierte Verfahren nach Anspruch 1,
- wobei die Erzeugung der ersten Token umfasst eine Anwendung einer Tokenisierungslogik (158) auf einen der ersten Feldwerte zur Erzeugung mehrerer der ersten Token aus diesem ersten Feldwert; und
- wobei die Erzeugung der zweiten Token umfasst eine Anwendung dieser oder einer anderen Tokenisierungslogik (158) auf einen der zweiten Feldwerte zur Erzeugung mehrerer der zweiten Token aus diesem zweiten Feldwert.

3. Das computerimplementierte Verfahren nach Anspruch 2, ferner umfassend:
- Erzeugen von dritten Token aus dritten Feldwerten der mehreren Datensätze, wobei die dritten Feldwerte in dritten der Felder gespeichert sind, wobei die dritten Felder einem dritten Feldtyp angehören;
- wobei die Erzeugung der dritten Token umfasst eine Verwendung eines der dritten Feldwerte in seiner Gesamtheit als eines der dritten Token.

4. Das computerimplementierte Verfahren nach einem der vorigen Ansprüche, wobei der Index sämtliche aus den Feldwerten der Datensätze einer Datenbank erzeugte Token so speichert, dass der Index jedes Token nur einmal enthält, wobei jedes Token Zeiger auf ein oder mehrere der Datensätze, aus deren Feldwerten es erzeugt wurde, beinhaltet.

5. Das computerimplementierte Verfahren nach einem der vorigen Ansprüche, wobei die in dem Index gespeicherten Token frei sind von Referenzen auf Felder oder Feldtypen, die zur Speicherung von Feldwerten verwendet wurden, die zur Erzeugung der Token dienten.

6. Das computerimplementierte Verfahren nach einem der vorigen Ansprüche, wobei die Datensätze in einer Datenbank gespeichert sind, die von dem DBMS verwaltet wird, wobei die Datensätze unterschiedlich viele Felder umfassen.

7. Das computerimplementierte Verfahren nach einem der vorigen Ansprüche, wobei der erste Feldtyp und der zweite Feldtyp ein gemeinsames, generisches Datenformat besitzen welches die Speicherung von Feldwerten erlaubt, die sowohl Textdaten als auch zumindest Bilddaten, Audiodaten und/oder Videodaten beinhalten.

8. Das computerimplementierte Verfahren nach einem der vorigen Ansprüche 2-5, wobei die Tokenisierungslogik ein Volltextindizierer ist welcher dazu konfiguriert ist, Texte in Wörter zu zerlegen und die Wörter als Token auszugeben.

9. Das computerimplementierte Verfahren nach einem der vorigen Ansprüche 2-5, wobei die Tokenisierungslogik ein generischer Tokenisierer ist, wobei die Anwendung der generischen Tokenisierungslogik auf einen Feldwert umfasst:
- Erkennen von Daten unterschiedlichen Datentyps innerhalb des Feldwertes, wobei die Daten unterschiedlichen Datentyps Textdaten sowie Bilddaten und einen oder mehrere weitere Datentyp umfassen, wobei die ein oder mehreren weiteren Datentypen Audiodaten und/oder Videodaten umfassen.

10. Das computerimplementierte Verfahren nach einem der vorigen Ansprüche,
- wobei die ersten Feldwerte Volltexte beinhalten, wobei die Volltexte aus Buchstaben des Alphabets gebildete Wörter beinhalten und mehrere der ersten Feldwerte ein oder mehrere Zahlen beinhalten; und
- wobei die zweiten Feldwerte jeweils aus einer Zahl bestehen, wobei jede Zahl, die in einem der zweiten Felder gespeichert ist,
o einen Identifikator einer Person repräsentiert, welcher der Datensatz, der den Identifikator im zweiten Feld enthält, zugeordnet ist; oder
∘ einen Berechtigungsnachweis repräsentiert, welcher der Datensatz, der den Identifikator im zweiten Feld enthält, zugeordnet ist, wobei der Berechtigungsnachweis der Person Zugriffsrechte auf geschützte Daten oder geschützte Software- oder Hardwarefunktionalitäten einräumt; oder
∘ einen geheimen kryptographischen Schlüssel repräsentiert; oder
∘ ein in Form einer Zahl kodiertes biometrisches Merkmal einer Person repräsentiert.

11. Das computerimplementierte Verfahren nach einem der vorherigen Ansprüchen, ferner umfassend:
- Empfang einer Suchanfrage (330), wobei die Suchanfrage einen Suchwert (328) beinhaltet;
- Durchsuchen des Index nach dem Suchwert;
- Identifizierung eines indizierten Tokens innerhalb des Index, welcher identisch ist zu dem Suchwert;
- Analyse von Datensatz-Zeigern, die in dem Index mit dem identifizierten Token verknüpft gespeichert sind, um ein oder mehrere der Datensätze zu identifizieren, welche ein oder mehrere Feldwerte beinhalten, aus welchen das indizierte Token erzeugt wurde,
- Zurückgabe der ein oder mehreren identifizierten Datensätze oder einer Referenz auf die ein oder mehreren identifizierten Datensätze als Antwort auf die Suchanfrage.

12. Das computerimplementierte Verfahren nach einem der vorigen Ansprüche, wobei die Datensätze einen Zufallswert-Feldwert umfassen, welcher zur Speicherung in einem Zufallswert-Feld bestimmt ist, ferner mit:
- Speichern der Datensätze in der Datenbank, wobei die Feldwerte jedes Datensatzes in eines der Felder gespeichert wird, wobei im Zuge der Speicherung das DBMS für jeden der Datensätze ein Zufallswertgeneriert und als Feldwert in das Zufallswert-Feld gespeichert wird; und
- Verwenden der in den Zufallswert-Feldern gespeicherten Zufallswerte als weitere Token bei der Erzeugung des Index, sodass die Zufallswertezu indexierten Token werden, wobei der Ort der Speicherung der ersten und zweiten Token und der Zufallswert-Token in der Struktur des Index unabhängig davon erfolgt von welchem der Felder die Token stammen.

13. Das computerimplementierte Verfahren nach einem der vorigen Ansprüche, ferner mit:
- Speicherung der Datensätze in verschlüsselter Form (326);
- Speicherung des Index in unverschlüsselter Form (154);
- Empfang einer Suchanfrage (330), wobei die Suchanfrage einen Suchwert (328) beinhaltet,
- Als Antwort auf den Empfang, Durchsuchen des unverschlüsselten Index nach dem Suchwert; und
- Zurückgabe (332) von ein oder mehreren anhand der Indexsuche identifizierten, verschlüsselten Datensätze oder einer Referenz auf die ein oder mehreren identifizierten Datensätze als Antwort auf die Suchanfrage.

14. Das computerimplementierte Verfahren nach Anspruch 13, wobei die Datensätze durch ein Client-Computersystem (156) jeweils einzeln so verschlüsselt werden, dass das Client- Computersystem diese wieder entschlüsselt kann, nicht jedoch ein Server-Computersystem (322) das zum Empfang der verschlüsselten Datensätze bestimmt ist, ferner mit:
- Vor der Verschlüsselung der Datensätze durch den Client-Computer, Generierung des Index (154) durch das Client- Computersystem;
- Verschlüsselung des Index mit einem öffentlichen Schlüssel (PubKS) des Server-Computers durch das Client- Computersystem;
- Senden der verschlüsselten Datensätze (326) und des verschlüsselten Index (324) von dem Client- Computersystem an das Server- Computersystem über ein Netzwerk (155);
- Entschlüsselung (338) des verschlüsselten Index durch das Server- Computersystem mittels eines privaten Schlüssels (PrivKS) des Server-Computers, wobei der private und der öffentliche Schlüssel des Server-Computers ein asymmetrisches kryptographisches Schlüsselpaar bilden;
- Speichern der verschlüsselten Datensätze durch das Server- Computersystem ohne diese entschlüsseln zu können;
- Speichern des entschlüsselten Indexes (154') durch das Server- Computersystem;
- Bereitstellung einer Schnittstelle (336) durch das Server- Computersystem um das Client- Computersystem oder anderen Computersystemen einen Zugriff auf den entschlüsselten Index zu ermöglichen;
- wobei der Empfang der Suchanfrage durch das Server-Computersystem über das Netzwerk erfolgt und das Durchsuchen des unverschlüsselten Index (154') nach dem Suchwert durch das Server-Computersystem durchgeführt wird; und
- wobei die Zurückgabe der ein oder mehreren anhand der Indexsuche identifizierten, verschlüsselten Datensätze über das Netzwerk an das Computersystem, von welchem die Anfrage stammt, erfolgt;
- Empfang der ein oder mehreren identifizierten und verschlüsselten Datensätze durch das Client-Computersystem; und
- Entschlüsselung (340) der empfangenen verschlüsselten Datensätze durch das Client-Computersystem .

15. Computersystem zur Erstellung eines Index (154), umfassend:
- ein oder mehrere Prozessoren (346);
- ein oder mehrere Datenspeichermedien (342),
- Ein DBMS (160), das dazu konfiguriert ist, die Datensätze (DR1-DR7) jeweils als eine Menge aus mehreren Feldwerten strukturiert in den ein oder mehreren Datenspeichermedien zu speichern, wobei die Feldwerte jeweils in einem Feld gespeichert werden, wobei die Felder jedes der Datensätze mindestens zwei unterschiedlichen Feldtypen (F1-F7) angehören,
- Programmlogik, die zur Erstellung des Index konfiguriert ist, wobei die Erstellung umfasst:
∘ Erzeugen von ersten Token (250) aus ersten Feldwerten mehrerer Datensätze, wobei die ersten Feldwerte in ersten der Felder gespeichert sind, wobei die ersten Felder einem ersten Feldtyp (F1) angehören;
∘ Erzeugen von zweiten Token (252, 254) aus zweiten Feldwerten der mehreren Datensätze, wobei die zweiten Feldwerte in zweiten der Felder gespeichert sind, wobei die zweiten Felder einem zweiten Feldtyp (F2, F5) angehören;
∘ Erzeugung eines durchsuchbaren Index (154) aus zumindest den ersten und zweiten Token, wobei der Ort der Speicherung der ersten und zweiten Token in der Struktur des Index unabhängig davon erfolgt von welchem der Felder die Token stammen.

## Claims

1. A computer-implemented method for creating an index (154), comprising the steps of:
- providing (170) a DBMS (160) configured to store data records (DR1-DR7) each structured as a set of multiple field values, wherein the field values are each stored in a field, wherein the fields of each of the data records belong to at least two different field types (F1-F7);
- generating (172) first tokens (250) from first field values of multiple data records, wherein the first field values are stored in first fields, wherein the first fields belong to a first field type (F1);
- generating (174) second tokens (252, 254) from second field values of the multiple data records, wherein the second field values are stored in second fields, wherein the second fields belong to a second field type (F2, F5);
- generating (176) a searchable index (154) from at least the first and second tokens, wherein the location of the storage of the first and second tokens in the structure of the index is independent of the fields from which the tokens originate.

2. The computer-implemented method according to claim 1,
- wherein the generation of the first token comprises an application of a tokenisation logic (158) to one of the first field values in order to generate a plurality of the first tokens from this first field value; and
- wherein the generation of the second token comprises an application of this or another tokenisation logic (158) to one of the second field values in order to generate a plurality of the second tokens from this second field value.

3. The computer-implemented method according to claim 2, further comprising the steps of:
- generating third tokens from third field values of the plurality of data records, wherein the third field values are stored in third fields, wherein the third fields belong to a third field type;
- wherein the generation of the third tokens comprises a use of one of the third field values in its entirety as one of the third tokens.

4. The computer-implemented method according to one of the preceding claims, wherein the index of all tokens generated from the field values of the data records of a database is stored such that the index contains each token only once, wherein each token includes pointers to one or more of the data records from whose field values said token was generated.

5. The computer-implemented method according to one of the preceding claims, wherein the tokens stored in the index are free from references to fields or field types which were used for the storage of field values that were utilised for the generation of the tokens.

6. The computer-implemented method according to one of the preceding claims, wherein the data records are stored in a database which is managed by the DBMS, wherein the data records comprise different numbers of fields.

7. The computer-implemented method according to one of the preceding claims, wherein the first field type and the second field type have a common, generic data format which allows the storage of field values which include both text data and also at least image data, audio data and/or video data.

8. The computer-implemented method according to one of preceding claims 2-5, wherein the tokenisation logic is a full-text indexer which is configured to break down texts into words and to output the words as tokens.

9. The computer-implemented method according to one of preceding claims 2-5, wherein the tokenisation logic is a generic tokeniser, wherein the application of the generic tokenisation logic to a field value comprises the step of:
- identifying data of different data types within the field value, wherein the data of different data types comprise text data as well as image data and one or more further data types, wherein the one or more further data types comprise audio data and/or video data.

10. The computer-implemented method according to one of the preceding claims,
- wherein the first field values include full texts, wherein the full texts include words formed from letters of the alphabet and a number of the first field values include one or more numbers; and
- wherein the second field values each consist of a number, wherein each number that is stored in one of the second fields
o represents an identifier of a person with whom the data record containing the identifier in the second field is associated; or
∘ represents a proof of authorisation with which the data record containing the identifier in the second field is associated, wherein the proof of authorisation grants the person access rights to protected data or protected software or hardware functionalities; or
∘ represents a secret cryptographic key; or
∘ represents a biometric feature of a person, which biometric feature is coded in the form of a number.

11. The computer-implemented method according to one of the preceding claims, further comprising the steps of:
- receiving a search query (330), wherein the search query includes a search value (328);
- searching the index for the search value;
- identifying an indexed token within the index which is identical to the search value;
- analysing data record pointers, which are stored in the index in a manner linked to the identified token, in order to identify one or more of the data records which include one or more field values from which the indexed token was generated;
- sending back the one or more identified data records or a reference to the one or more identified data records as a response to the search query.

12. The computer-implemented method according to one of the preceding claims, wherein the data records comprise a random-value field value which is intended for storage in a random-value field, the method further comprising the steps of:
- storing the data records in the database, wherein the field values of each data record are stored in one of the fields, wherein, during the course of the storing process, the DBMS generates a random value for each of the data records and this is stored in the random-value field as a field value; and
- using the random values stored in the random-value fields as further tokens when generating the index so that the random values are converted into indexed tokens, wherein the location of the storage of the first and second tokens and of the random value tokens in the structure of the index is independent of the fields from which the tokens originate.

13. The computer-implemented method according to one of the preceding claims, further comprising the steps of:
- storing the data records in encrypted form (326);
- storing the index in unencrypted form (154);
- receiving a search query (330), wherein the search query includes a search value (328);
- in response to the receipt, searching the unencrypted index for the search value; and
- sending back (332) one or more encrypted data records identified on the basis of the index search or a reference to the one or more identified data records in response to the search query.

14. The computer-implemented method according to claim 13, wherein the data records are each encrypted individually by a client computer system (156), such that the client computer system is able to decrypt them again, but a server computer system (322) that is intended to receive the encrypted data records is unable to do so, the method further comprising the steps of:
- prior to the encryption of the data records by the client computer, generating the index (154) by the client computer system;
- encrypting the index with a public key (PubKS) of the server computer by the client computer system;
- sending the encrypted data records (326) and the encrypted index (324) from the client computer system to the server computer system via a network (155);
- decrypting (338) the encrypted index by the server computer system by means of a private key (PrivKS) of the server computer, wherein the private and the public key of the server computer form an asymmetric cryptographic key pair;
- storing the encrypted data records by the server computer system without being able to decrypt them;
- storing the decrypted index (154') by the server computer system;
- providing an interface (336) by the server computer system in order to allow the client computer system or other computer systems to have access to the decrypted index;
- wherein the search query is received by the server computer system via the network and the searching of the unencrypted index (154') for the search value is performed by the server computer system; and
- wherein the one or more encrypted data records identified on the basis of the index search is/are sent back via the network to the computer system from which the query originates;
- receiving the one or more identified and encrypted data records by the client computer system; and
- decrypting (340) the received encrypted data records by the client computer system.

15. The computer system for creating an index (154), comprising:
- one or more processors (346);
- one or more data storage media (342);
- a DBMS (160) which is configured to store each of the data records (DR1-DR7) in structured fashion as a set of multiple field values in the one or more data storage media, wherein the field values are each stored in a field, wherein the fields of each of the data records belong to at least two different field types (F1-F7),
- a program logic, which is configured to create the index, wherein the creation comprises the steps of:
∘ generating first tokens (250) from first field values of a plurality of data records, wherein the first field values are stored in first fields, wherein the first fields belong to a first field type (F1);
∘ generating second tokens (252, 254) from second field values of the multiple data records, wherein the second field values are stored in second fields, wherein the second fields belong to a second field type (F2, F5);
∘ generating a searchable index (154) from at least the first and second tokens, wherein the location of the storage of the first and second tokens in the structure of the index is independent of the fields from which the tokens originate.

## Revendications

1. Procédé mis en œuvre par ordinateur permettant l'établissement d'un index (154), comprenant:
- la fourniture (170) d'un système de gestion de données, DBMS, (160), qui est conçu pour stocker à l'état structuré des ensembles de données (DR1 à DR7) respectivement sous forme d'une quantité à base de plusieurs valeurs de champ, où les valeurs de champ sont respectivement stockées dans un champ, où les champs de chacun des ensembles de données font partie d'au moins deux types de champs (F1 à F7) différents,
- la création (172) de premiers jetons (250) à partir de premières valeurs de champ de plusieurs ensembles de données, où les premières valeurs de champ sont stockées dans des premiers champs parmi les champs, où les premiers champs font partie d'un premier type de champ (F1) ;
- la création (174) de deuxièmes jetons (252, 254) à partir de deuxièmes valeurs de champ de plusieurs ensembles de données, où les deuxièmes valeurs de champ sont stockées dans des deuxièmes champs parmi les champs, où les deuxièmes champs font partie d'un deuxième type de champ (F2, F5) ;
- la création (176) d'un index (154) pouvant être exploré à partir d'au moins les premiers et deuxièmes jetons, où le lieu du stockage des premiers et deuxièmes jetons dans la structure de l'index a lieu indépendamment du fait duquel des champs les jetons proviennent.

2. Procédé mis en œuvre par ordinateur selon la revendication 1,
- dans lequel la génération des premiers jetons comprend une application d'une logique de tokénisation (158) à l'une des premières valeurs de champ pour la création de plusieurs parmi les premiers jetons à partir de cette première valeur de champ ; et
- dans lequel la génération des deuxièmes jetons comprend une application de cette logique de tokénisation (158) ou d'une autre logique à l'une des deuxièmes valeurs de champ pour la création de plusieurs parmi les deuxièmes jetons à partir de cette deuxième valeur de champ.

3. Procédé mis en œuvre par ordinateur selon la revendication 2, comprenant en outre :
- la création de troisièmes jetons à partir de troisièmes valeurs de champ des nombreux ensembles de données, où les troisièmes valeurs de champ sont stockées dans des troisièmes champs parmi les champs, où les troisièmes champs font partie d'un troisième type de champ ;
- où la création des troisièmes jetons comprend une application d'une des troisièmes valeurs de champ dans sa totalité sous forme d'un parmi les troisièmes jetons.

4. Procédé mis en œuvre par ordinateur selon l'une des revendications précédentes, dans lequel l'index stocke tous les jetons créés à partir des valeurs de champ des ensembles de données d'une banque de données de telle manière que l'index ne contient qu'une seule fois chaque jeton, où chaque jeton contient des pointeurs pour un ou plusieurs parmi les ensembles de données à partir des valeurs de champ desquels il a été créé.

5. Procédé mis en œuvre par ordinateur selon l'une des revendications précédentes, dans lequel les jetons stockés dans l'index sont exempts de références concernant les champs ou les types de champ qui ont été employés pour le stockage de valeurs de champ qui servaient à la création des jetons.

6. Procédé mis en œuvre par ordinateur selon l'une des revendications précédentes, dans lequel les ensembles de données sont stockées dans une banque de données qui est gérée par le DBMS, où les ensembles de données comprennent beaucoup de champs.

7. Procédé mis en œuvre par ordinateur selon l'une des revendications précédentes, dans lequel le premier type de champ et le deuxième type de champ possèdent un format de donnée commun, générique, lequel permet le stockage de valeurs de champ qui contiennent à la fois des données de texte et également au moins des données d'image, des données audio et/ou des données vidéo.

8. Procédé mis en œuvre par ordinateur selon l'une des revendications 2 à 5, dans lequel la logique de tokénisation est un indexeur de texte intégral, lequel est conçu pour découper des textes en mots et pour produire les mots sous forme de jetons.

9. Procédé mis en œuvre par ordinateur selon l'une des revendications précédentes 2 à 5, dans lequel la logique de tokénisation est un tokéniseur générique, où l'application de la logique de tokénisation générique à une valeur de champ comprend :
- la reconnaissance de données de divers types de données dans la valeur de champ, où les données de divers type de données comprennent à la fois des données de texte ainsi que des données d'images et un ou plusieurs autres types de données, où un ou plusieurs autres types de données comprennent des données audio et/ou vidéo.

10. Procédé mis en œuvre par ordinateur selon l'une des revendications précédentes,
- dans lequel les premières valeurs de champ contiennent des textes intégraux, où les textes intégraux contiennent des mots formés à partir de lettres de l'alphabet et plusieurs parmi les premières valeurs de champ contiennent un ou plusieurs nombres ; et
- dans lequel les deuxièmes valeurs de champ sont constituées respectivement d'un nombre, où chaque nombre, qui est stocké dans un des deuxièmes champs,
∘ représente un identificateur d'une personne, à laquelle est associé l'ensemble de données qui contient l'identificateur dans le deuxième champ ; ou
∘ représente un certificat d'autorisation, lequel est associé à l'ensemble de données qui contient l'identificateur dans le deuxième champ, où le certificat d'autorisation de la personne aménage des droits d'accès à des données sécurisées ou à des fonctionnalités logicielles ou matérielles sécurisées ; ou
∘ représente une clé cryptographique privée ; ou
∘ représente une caractéristique biométrique codée d'une personne sous forme d'un nombre.

11. Procédé mis en œuvre par ordinateur selon l'une des revendications précédentes, comprenant en outre :
- la réception d'une demande de recherche (330), où la demande de recherche contient une valeur de recherche (328) ;
- l'exploration de l'index pour trouver la valeur de recherche ;
- l'identification d'un jeton indexé dans l'index, lequel est identique à la valeur de recherche ;
- l'analyse de pointeurs d'ensemble de données qui sont stockés dans l'index, reliés au jeton identifié afin d'identifier un ou plusieurs parmi les ensembles de données, lesquels contiennent une ou plusieurs valeurs de champ à partir desquelles le jeton identifié a été créé,
- la restitution de l'ensemble ou de plusieurs ensembles de données identifiés ou d'une référence à un ou plusieurs ensembles de données identifiés sous forme de réponse à la demande de recherche.

12. Procédé mis en œuvre par ordinateur selon l'une des revendications précédentes, dans lequel les ensembles de données comprennent une valeur de champ valeur aléatoire, laquelle est prévue pour le stockage dans un champ de valeur aléatoire, pourvu en outre :
- du stockage des ensembles de données dans la banque de données, où les valeurs de champ de chaque ensemble de données sont stockées dans un des champs, où, au cours du stockage, le DBMS génère une valeur aléatoire pour chacun des ensembles de données et qui est stockée dans le champ de valeurs aléatoires en tant que valeur de champ ; et
- de l'emploi des valeurs aléatoires stockées dans les champs de valeurs aléatoires sous forme de nouveaux jetons lors de la création de l'index, de sorte que les valeurs aléatoires deviennent des jetons indexés, où le lieu du stockage dans la structure de l'index des premiers et deuxièmes jetons et des jetons de valeurs aléatoires a lieu de manière indépendante duquel des champ proviennent les jetons.

13. Procédé mis en œuvre par ordinateur selon l'une des revendications précédentes, pourvu en outre :
- du stockage des ensembles de données sous forme cryptée (326) ;
- du stockage de l'index sous forme non cryptée (154) ;
- de réception d'une demande de recherche (330), où la demande de recherche contient une valeur de recherche (328),
- en réponse à la réception, la recherche de la valeur de recherche dans l'index non crypté ; et
- la restitution (332) d'un ou de plusieurs ensembles de données cryptés identifiés à l'aide de la recherche dans l'index ou d'une référence à un ou plusieurs ensembles de données identifiés sous forme de réponse à la demande de recherche.

14. Procédé mis en œuvre par ordinateur selon la revendication 13, dans lequel les ensembles de données sont cryptés respectivement individuellement par un système informatique client (156) de telle manière que le système informatique client peut de nouveau les décrypter, et non pas un système informatique serveur (322) qui est prévu pour la réception des ensembles de données cryptés, pourvu en outre :
- avant le cryptage des ensembles de données par l'ordinateur client, la génération d'un index (154) par le système informatique client ;
- le cryptage de l'index avec une clé publique (PubKS) de l'ordinateur serveur par le système informatique client ;
- l'envoi des ensembles de données (326) cryptés et de l'index (324) crypté du système informatique client au système informatique serveur par le biais d'un réseau (155) ;
- le décryptage (338) de l'index crypté par le système informatique serveur au moyen d'une clé privée (PrivKS) de l'ordinateur serveur, où les clés privée et publique de l'ordinateur serveur forment une paire de clés cryptographiques asymétrique ;
- le stockage des ensembles de données cryptées par le système informatique serveur sans pouvoir les décrypter ;
- le stockage de l'index décrypté (154') par le système informatique serveur ;
- la mise en place d'une interface (336) par le système informatique serveur afin de permettre au système informatique client ou à d'autres systèmes informatiques un accès à l'index décrypté ;
- où la réception de la demande de recherche par le système informatique serveur a lieu par le biais du réseau et l'exploration de l'index non crypté (154') est effectuée après la valeur de recherche par le système informatique serveur ; et
- où la restitution de l'ensemble ou de plusieurs ensembles de données cryptés, identifiés à l'aide de la recherche dans l'index, a lieu au niveau du système informatique d'où provient la demande par le biais du réseau ;
- la réception d'un ou de plusieurs ensembles de données identifiés et cryptés par le système informatique client ; et
- le décryptage (340) des ensembles de données cryptés reçus par le système informatique client.

15. Système informatique permettant l'établissement d'un index (154), comprenant :
- un ou plusieurs processeurs (346) ;
- un ou plusieurs supports de stockage de données (342),
- un DBMS (160) qui est conçu pour stocker les ensembles de données (DR1 à DR7) respectivement sous la forme d'une quantité de plusieurs valeurs de champ à l'état structuré dans un support ou plusieurs supports de stockage de données, où les valeurs de champ sont respectivement stockées dans un champ, où les champs de chacun des ensembles de données font partie d'au moins deux types de champs (F1 à F7) différents,
- une logique de programme qui est conçue pour l'établissement de l'index, où l'établissement comprend :
∘ la création de premiers jetons (250) à partir de premières valeurs de champ de plusieurs ensembles de données, où les premières valeurs de champ sont stockées dans des premiers champs parmi les champs, où les premiers champs font partie d'un premier type de champ (F1) ;
∘ la création de deuxièmes jetons (252, 254) à partir de deuxièmes valeurs de champ de plusieurs ensembles de données, où les deuxièmes valeurs de champ sont stockées dans des deuxièmes champs parmi les champs, où les deuxièmes champs font partie d'un deuxième type de champ (F2, F5) ;
∘ la création d'un index (154) pouvant être exploré à partir d'au moins les premiers et deuxièmes jetons, où le lieu du stockage des premiers et deuxièmes jetons dans la structure de l'index a lieu indépendamment du fait duquel des champs les jetons proviennent.
